(19) **Europäisches Patentamt / European Patent Office / Office européen des brevets**

(11) **EP 4 787 310 A1**

(12) **EUROPEAN PATENT APPLICATION**
published in accordance with Art. 153(4) EPC

(43) Date of publication:
05.08.2026 Bulletin 2026/32

(21) Application number: 24904339.9

(22) Date of filing: 29.08.2024

(51) International Patent Classification (IPC):
*G06T 7/593* (2017.01)   *G06T 17/00* (2006.01)
*G06T 3/4007* (2024.01)   *G06N 3/08* (2023.01)

(52) Cooperative Patent Classification (CPC):
G06V 10/764; G06N 3/08; G06T 3/40;
G06T 3/4007; G06T 7/50; G06T 7/593; G06T 7/62;
G06T 7/70; G06T 17/00; H04N 13/128;
H04N 13/261; G06T 2207/20081; G06T 2207/20084

(86) International application number:
PCT/KR2024/096095

(87) International publication number:
WO 2025/127774 (19.06.2025 Gazette 2025/25)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 13.12.2023 KR 20230181167

(71) Applicant: Samsung Electronics Co., Ltd.
Suwon-si, Gyeonggi-do 16677 (KR)

(72) Inventors:
• JEONG, Younghoon
  Suwon-si, Gyeonggi-do 16677 (KR)

• CHO, Daesung
  Suwon-si, Gyeonggi-do 16677 (KR)
• KIM, Bongjoe
  Suwon-si, Gyeonggi-do 16677 (KR)
• MOON, Youngsu
  Suwon-si, Gyeonggi-do 16677 (KR)
• PARK, Seungho
  Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **IMAGE PROCESSING DEVICE AND OPERATION METHOD THEREOF**

(57) An image processing device for performing three-dimensional (3D) conversion and a method performed by the image processing device are provided. The image processing device includes a memory to store one or more instructions, and at least one processor configured to execute the one or more instructions stored in the memory. The processor may be configured to analyze a content class of an input image. The processor may be configured to obtain a depth estimation model corresponding to the content class of the input image in real time by using on-device learning, based on a result of analyzing the content class of the input image. The processor may be configured to obtain a depth map of the input image that reflects estimated depth information, based on the depth estimation model according to the on-device learning. The processor may be configured to perform 3D conversion for the input image, based on the depth map of the input image.

FIG. 3

**Description**

Technical Field

The disclosure relates to an image processing device and a method performed by the image processing device, and more particularly, to an image processing device for performing three-dimensional (3D) conversion and a method performed by the image processing device.

Background Art

Recently, a number of three-dimensional (3D) displays (e.g., light field displays, hologram displays, etc.) have been released, providing functions to experience 3D games, 3D movies, 3D models, etc. However, apart from some 3D produced content, there is a lack of content that may be viewed in 3D by using 3D displays. In addition, when users view images, there is a growing tendency to prefer viewing two-dimensional (2D) images in 3D to improve the sense of reality and immersion.

Accordingly, companies that provide some 3D displays have actively conducted research into technology that converts 2D images into 3D images when 2D images are input.

The most important technology in converting 2D images into 3D images is to extract depth information similar to the real world from 2D images having no depth information. The accuracy of technology for estimating depth information from 2D images is gradually increasing due to deep learning methods utilizing artificial intelligence and an increase in various image-depth map databases (DBs) for learning.

However, when a depth sensor is not used, it is difficult to estimate the absolute depth of objects in images, and it is possible to estimate only relative depths between objects or between objects and the background. Due to limitations of such relative depth estimation and differences in specifications of displays, there is a problem in that a depth estimation error, which is different from a stereoscopic effect felt in the real world, occurs in 3D images converted from 2D images.

In addition, when 2D images, for example, a complex image with low correlation including various types of content such as graphic images, games, documents, comments, subtitles, seminar materials, etc., are input, many depth estimation errors occur.

Due to various depth estimation errors that occur when 3D images are converted from 2D images, users experience increased fatigue and difficulty viewing content for a long time. In order to solve such problems, some companies provide a slide type user interface (UI) that manually adjusts the overall intensity of the stereoscopic effect of 3D-converted images.

However, in order to further improve the satisfaction and convenience of users using 3D displays, a technology to further improve the depth estimation accuracy of input 2D images is necessary.

The disclosure provides a method of dynamically applying a depth estimation model in real time and a method of non-linearly changing a depth map by analyzing objects included in each of scenes of an input 2D image, based on analysis of a content class of the input 2D image.

Disclosure of Invention

Solution to Problem

An image processing device according to an embodiment of the disclosure includes a memory storing one or more instructions, and at least one processor configured to execute the one or more instructions. The processor may be configured to execute the one or more instructions to analyze a content class of an input image. The processor may be configured to obtain a depth estimation model corresponding to the content class of the input image in real time by using on-device learning, based on a result of analyzing the content class of the input image. The processor may be configured to obtain a depth map of the input image that reflects estimated depth information, based on the depth estimation model according to the on-device learning. The processor may be configured to perform 3D conversion for the input image based on the depth map of the input image.

A method performed by an image processing device according to an embodiment of the disclosure includes analyzing a content class of an input image. The method may include obtaining a depth estimation model corresponding to the content class of the input image in real time by using on-device learning, based on a result of analyzing the content class of the input image. The method may include obtaining a depth map of the input image that reflects estimated depth information, based on the depth estimation model according to the on-device learning. The method may include performing 3D conversion for the input image based on the depth map of the input image.

An embodiment of the disclosure provides a computer-readable recording medium having recorded thereon a program for executing at least one of the disclosed embodiments of the method on a computer as technical means for achieving the above-described technical objectives.

Other technical features may be easily understood by one of ordinary skill in the art from the following drawings, descriptions, and claims.

Brief Description of Drawings

FIG. 1 is a reference diagram for describing the concept of an image processing device according to an embodiment of the disclosure.

FIGS. 2A, 2B, and 2C are diagrams for describing operations, performed by an image processing device, of performing three-dimensional (3D) conversion for a two-dimensional (2D) input image, according to an example.

FIG. 3 is a schematic diagram for describing an operation, performed by an image processing device, of performing 3D conversion for a 2D input image, according to an embodiment of the disclosure.

FIG. 4 is an internal block diagram of an image processing device according to an embodiment of the disclosure.

FIG. 5 is a diagram for describing a process, performed by an image processing device, of analyzing a content class, according to an embodiment of the disclosure.

FIG. 6 is a diagram for describing a process, performed by an image processing device, of obtaining a depth estimation model corresponding to a 2D input image from a cloud server, according to an embodiment.

FIG. 7 is a diagram for describing a process, performed by an image processing device, of obtaining a depth estimation model by using on-device learning, according to an embodiment of the disclosure.

FIG. 8 is a diagram for describing a process, performed by an image processing device, of obtaining a depth estimation model by using on-device learning, according to an embodiment of the disclosure.

FIG. 9 is a flowchart for describing a method, performed by an image processing device, of performing 3D conversion for a 2D input image, according to an embodiment of the disclosure.

FIG. 10 is an internal block diagram of an image processing device, according to an embodiment of the disclosure.

FIG. 11 is a diagram for describing a process, performed by an image processing device, of analyzing a scene object of a 2D input image, according to an embodiment of the disclosure.

FIG. 12A is a diagram for describing a process, performed by an image processing device, of dynamically changing a depth map, according to an embodiment of the disclosure.

FIG. 12B is a diagram for describing an example of a process, performed by an image processing device, of dynamically changing a depth map, according to an embodiment of the disclosure.

FIG. 12C is a diagram for describing an example of a result of a process, performed by an image processing device, of dynamically changing a depth map, according to an embodiment of the disclosure.

FIG. 13 is a diagram for describing a process, performed by an image processing device, of controlling a stereoscopic effect, according to an embodiment of the disclosure.

FIG. 14 is a diagram for describing an example of a result of a process, performed by an image processing device, of controlling a stereoscopic effect, according to an embodiment of the disclosure.

FIG. 15 is a flowchart for describing a method, performed by an image processing device, of performing 3D conversion for a 2D input image, according to an embodiment of the disclosure.

FIG. 16 is a diagram for describing an example of an effect of an image processing device according to an embodiment of the disclosure.

FIG. 17 is a block diagram of an image processing device according to an embodiment of the disclosure.

Mode for the Invention

Although terms used herein are of among general terms which are currently and broadly used by considering functions in the disclosure, these terms may vary according to intentions of those of ordinary skill in the art, precedents, the emergence of new technologies, etc. In addition, there may be terms selected arbitrarily by the applicants in particular cases, and in these cases, the meaning of those terms will be described in detail in the corresponding portions of the detailed description. Therefore, the terms used herein should be defined based on the meaning thereof and descriptions made throughout the specification, rather than based on names simply called.

In addition, the terms used herein are merely used to describe specific embodiments and are not intended to limit the disclosure.

The singular terms used herein are intended to include the plural forms as well, unless the context clearly indicates otherwise. All terms used herein, including technical and scientific terms, have the same meaning as generally understood by those of ordinary skill in the art.

It will be understood that, throughout the specification, when a portion is referred to as "comprising" or "including" a structural element, the portion may further include another structural element in addition to the structural element rather than exclude the other structural element, unless otherwise stated. In addition, the term such as "... unit", "... portion", "... module", or the like used herein refers to a unit for processing at least one function or operation, and this may be implemented by hardware, software, or a combination of hardware and software

The processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In addition, each element described hereinafter may additionally perform some or all of functions performed by another element, in addition to main functions of itself, and some of the main functions of each element may be performed entirely by another element.

The expression "configured (or set) to" used herein may be used interchangeably with, for example, "suitable for", "having the capacity to", "designed to", "adapted to", "made to", or "capable of" depending on the circumstances.

The expression "configured (or set) to" does not essentially mean "specially designed in hardware to". Rather, in some circumstances, the expression "system configured to" may mean that the system may perform an operation together with another device or parts.

When it is described herein that one element is "connected" or "coupled" to the other element, it is understood that the one element may be directly connected to or may be directly coupled to the other element but unless explicitly described to the contrary, may be "connected" or "coupled" to the other element through another element therebetween. When an element is referred to as being "connected" to another element herein, it may be "directly connected" to the other element or may be "electrically connected" to the other element with one or more intervening elements therebetween.

The use of the terms "the" and similar referents in the context of describing the disclosure, especially in the context of the claims, are to be understood to cover both the singular and the plural. Also, the operations of all methods described herein may be performed in any suitable order unless otherwise indicated herein or otherwise clearly contradicted by context. The disclosure is not limited to the described order of the operations.

Phrases such as "an some embodiments" or "in an embodiment", which appear in various places herein, are not necessarily all referring to the same embodiment.

Also, the expression "at least one of a, b, and c" herein may refer to "a", "b", "c", "a and b", "a and c", "b and c", "all of a, b, and c", or variations thereof. Numbers (e.g., first, second, third, etc.) used in the description of the specification are merely identification symbols to distinguish one element from another element.

An embodiment of the disclosure may be represented by functional block configurations and various processing operations. Some or all of the functional blocks may be implemented in various numbers of hardware and/or software configurations that perform particular functions. For example, the functional blocks of the disclosure may be implemented by one or more microprocessors or by circuit configurations for a given function. Also, for example, the functional blocks of the disclosure may be implemented in various programming or scripting languages. The functional blocks may be implemented in algorithms running on one or more processors. In addition, the disclosure may employ the related art for electronic configuration, signal processing, and/or data processing.

In order to clearly explain the disclosure in the drawings, parts that are not related to the description are omitted, and similar parts are given similar reference numerals throughout the specification. In addition, the reference numerals used in each drawing are only for explaining each drawing, and different reference numerals used in each of different drawings are not intended to indicate different elements. In addition, the connecting lines or connecting members between the elements shown in the drawings are merely illustrative of functional connections and/or physical or circuit connections. In a practical device, the connections between the elements may be represented by various functional connections, physical connections, or circuit connections that may be replaced or added.

Hereinafter, an embodiment of the disclosure will be described in detail with reference to the accompanying drawings so as to be easily embodied by those of ordinary skill in the art. The disclosure may, however, be embodied in many different forms and should not be construed as limited to the embodiments set forth herein. In describing the embodiments, when it is determined that detailed descriptions of related known technologies may unnecessarily obscure the gist of the disclosure, the detailed descriptions will be omitted.

In addition, herein, the term 'user' refers to a person using an image processing device and may include a consumer, an evaluator, a viewer, a manager or an installation engineer. In addition, herein, the term 'manufacturer' may refer to a manufacturer that manufactures an image processing device and/or elements included in the image processing device.

Herein, the term 'image' may refer to a still image, a picture, a frame, a moving image including a plurality of consecutive still images, or a video.

Herein, the term 'two-dimensional (2D) image' is an image in which each pixel is configured in a 2D planar form corresponding to rows and columns, and may not include depth/height information.

Herein, the term 'three-dimensional (3D) image' is an image in which each pixel is configured in a 3D spatial form corresponding to rows, columns, and depth/height information, and may include depth/height information.

Herein, the term 'scene' may refer to a series of consecutive image frames that constitute an image. An image may include various scenes, and one scene may be connected to ae next scene to form the overall flow of the image. Each of scenes forming the image may be divided into an event that occurs at a specific time in a specific place, a specific topic, or a specific story unit.

Herein, the term 'neural network' is a representative example of a computing system that simulates human brain nerves, and is not limited to an artificial neural network model using a specific algorithm. The neural network may also be referred to as 'artificial neural network (ANN) ' or 'deep neural network (DNN) '. The neural network may include, for example, a convolutional neural network (CNN), a DNN, a recurrent neural network (RNN), a restricted Boltzmann machine (RBM), a deep belief network (DBN), a bidirectional recurrent deep neural network (BRDNN), a deep Q-network, a histogram of oriented gradient (HOG), a scale-invariant feature transform (SHIFT), a long shot-term memory (LSTM), support vector machine (SVM), SoftMax, etc. but is not limited to the examples described above.

Herein, the term 'neural network model' may refer to a neural network generated/trained to perform an operation to achieve a specific purpose. The neural network generated/trained to perform a specific function may be expressed as a ''functional term'' + ''model'' (e.g., a content class analysis model, a depth estimation model, an object analysis model, a depth dynamic change model, a stereoscopic effect control model, etc.)

Herein, when a neural network model is newly generated/trained/obtained, this may be expressed as 'updating the neural network model' or 'updating parameters of the neural network model'. The expression 'updating' a neural network model may be mentioned as 'renewing', 'adapting', 'adjusting', 'modifying', or 'changing' the neural network model.

Herein, the term 'machine learning' may refer to an algorithm that allows a neural network model to be trained from data or an algorithm that allows the neural network model to receive input data and predict output data. Deep learning may mean performing machine learning by using a deep neural network model.

Herein, the term 'parameter' or 'weight' is an element included in a matrix corresponding to the neural network model, and may refer to a value applied to input data for inference using the neural network model. Each of the plurality of layers that forming the neural network model may have a plurality of parameters or weights, and may perform inference through an operation between an operation result of a previous layer and the plurality of parameters or weights. A plurality of parameters or weights included in the plurality of layers constituting the neural network model may be optimized through training of the neural network model. For example, the plurality of parameters or weights may be updated to reduce or minimize a loss value or a cost value obtained from the neural network model during a training process.

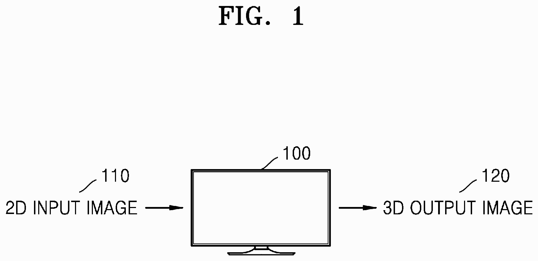

FIG. 1 is a reference diagram for describing the concept of an image processing device 100 according to an embodiment of the disclosure.

Referring to FIG. 1, the image processing device 100 may be an electronic device that may receive a 2D image 110 as input, convert the 2D image 110 into a 3D image 120, and output the 3D image 120. In an embodiment of the disclosure, the image processing device 100 may be implemented as a variety of types of electronic device including a display.

The image processing device 100 may be of a fixed or mobile type, and may be a 3D display (e.g., a light field display), but is not limited thereto.

The image processing device 100 may include at least one of a digital TV capable of receiving a digital broadcast, a desktop, a smart phone, a tablet personal computer (PC), a mobile phone, a video phone, or an e-book reader, a laptop PC, a netbook computer, a digital camera, a personal digital assistant (PDA), a portable multimedia player (PMP), a camcorder, a navigation, a wearable device, a smart watch, a home network system, a security system, or a medical device.

The image processing device 100 may be implemented not only as a flat display device, but also as a curved display device, which is a screen with a curvature, or a flexible display device with an adjustable curvature.

In an embodiment of the disclosure, the image processing device 100 may utilize artificial intelligence (AI) technology to convert the 2D image 110 into the 3D image 120. In an embodiment of the disclosure, the image processing device 100 may be an edge device in which AI is combined with an electronic device providing the 3D image 120 to a user.

In an embodiment of the disclosure, the image processing device 100 may obtain the 2D image 110 by inputting or receiving the 2D image 110.

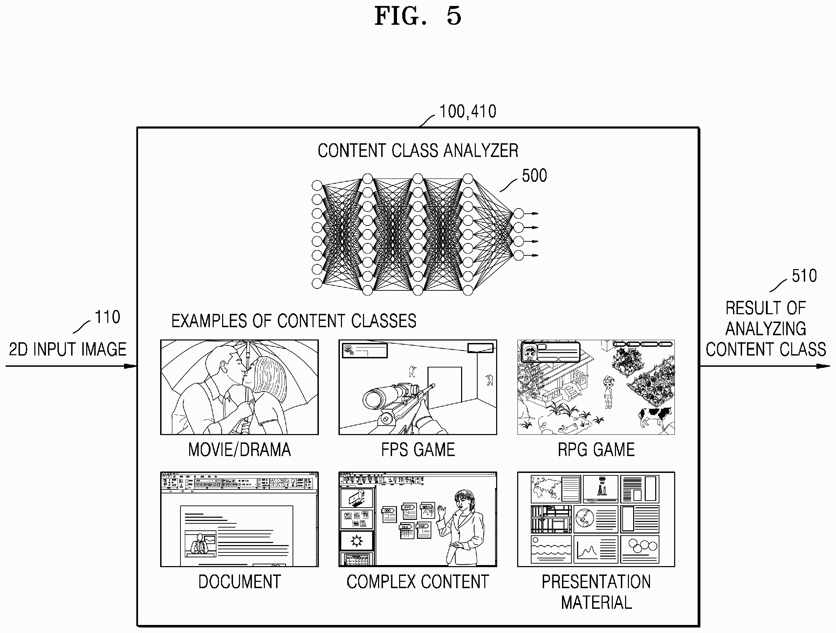

In an embodiment of the disclosure, the image processing device 100 may analyze a content class of the obtained 2D image 110. In an embodiment of the disclosure, the image processing device 100 may analyze a content class of each of scenes constituting the obtained 2D image 110. This will be described in detail in FIG. 5.

In the disclosure, the 'content class' of the 2D input image 110 may include movie, drama, first person shooter (FPS) game, role playing game (RPG), real time strategy (RTS) game, massively multiplayer online RPG (MMORPG), document, complex content, presentation material, etc. but is not limited thereto. For example, the complex content may refer to a single content including content with various characteristics, such as 2D animation, PowerPoint (PPT), comment image, document, etc., like an Internet lecture image. The 'content class' may be referred to as a 'content type' or a 'content category'.

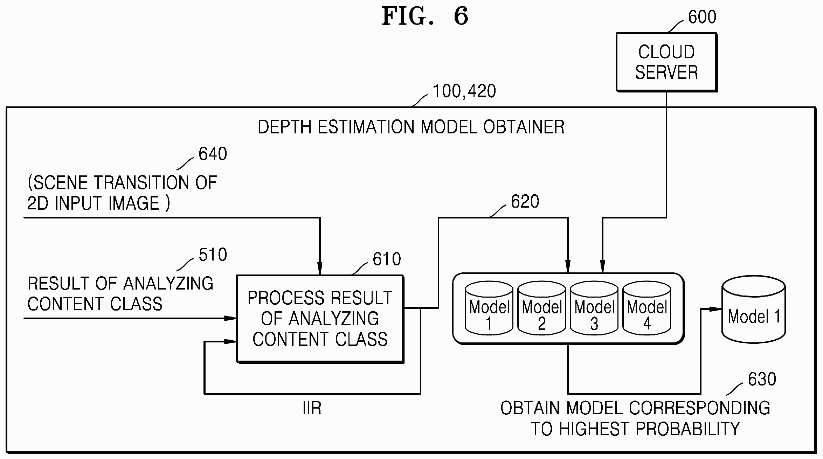

In an embodiment of the disclosure, the image processing device 100 may, in real time, generate/obtain one or more depth estimation models corresponding to the 2D input image 110 or corresponding to each of scenes constituting the 2D input image 110, based on a result of analyzing the content class of the obtained 2D input image 110. This will be described in detail with reference to FIGS. 6 to 8.

In the disclosure, the 'depth estimation model' may refer to an artificial neural network model trained to predict depth information of each of pixels constituting the 2D image 110. For example, the depth estimation model may refer to the artificial neural network model trained to predict the depth information of each of pixels constituting the 2D image 110 by using technology such as CNN, DNN, RNN, RBM, DBN, BRDNN or deep Q-network, HOG, SHIFT, LSTM, SVM, SoftMax, etc., but is not limited thereto.

The depth information may refer to information indicating where a corresponding pixel is located from a certain reference plane in a 3D space when 3D conversion is performed from the 2D image 110, and may be expressed in a meter or pixel unit.

In an embodiment of the disclosure, the image processing device 100 may, in real time, obtain or generate one or more depth estimation models corresponding to the 2D image 110 or corresponding to each of scenes constituting the 2D image 110, by using cloud-based AI technology or on-device-based AI technology.

In the case of cloud-based AI technology, training of the neural network model or inference using the neural network model may be performed by a cloud server. In an embodiment of the disclosure, the image processing device 100 may, in real time, obtain one or more depth estimation models corresponding to the 2D image 110 or corresponding to each of the scenes constituting the 2D input image 110, from the cloud server, based on the result of analyzing the content class of the 2D image 110.

In the case of on-device-based AI technology, data may be processed by the edge device itself in real time, and thus, training of the neural network model and inference using the neural network model may be performed by the edge device. In an embodiment of the disclosure, the image processing device 100 may, in real time, generate/obtain one or more depth estimation models corresponding to the 2D image 110 or corresponding to each of the scenes constituting the 2D image 110, by collecting data and training the depth estimation models by itself, that is, using on-device learning, based on the result of analyzing the content class of the 2D image 110.

In an embodiment of the disclosure, on-device AI technology may be performed by at least one processor included in the image processing device 100. In an embodiment of the disclosure, on-device AI technology may be mentioned as on-device learning.

In an embodiment of the disclosure, the image processing device 100 may obtain a depth map (e.g., a first depth map) of the 2D input image 110, based on one or more depth estimation models corresponding to the 2D input image 110 or corresponding to each of the scenes constituting the 2D image 110, which is obtained from the cloud server in real time or obtained by itself in real time using on-device learning. The 'depth map' may refer to a 2D image in which depth information of each of pixels constituting an image is expressed as a value such as brightness or color of each pixel. The depth estimation model may receive the 2D image 110 as input data and output the depth map of the 2D image 110 as output data.

In the disclosure, a depth map of the 2D image 110 initially obtained by the image processing device 100, that is, a depth map before non-linearly changing the depth map, may be mentioned as a 'depth map' or a 'first depth map'.

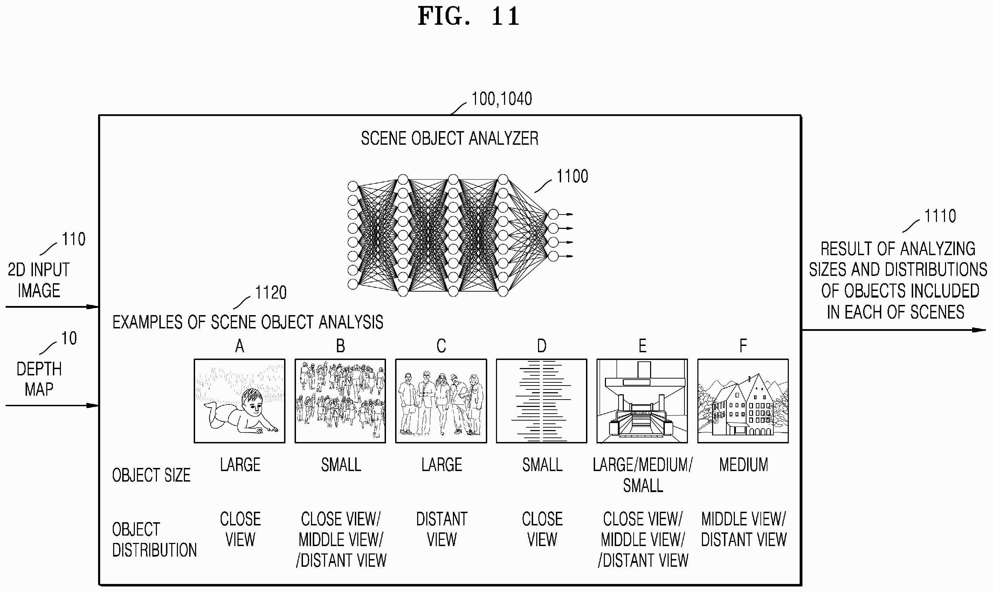

In an embodiment of the disclosure, the image processing device 100 may obtain a modified depth map (e.g., a second depth map), by non-linearly changing the depth map (e.g., the first depth map), based on a result of analyzing sizes and distributions of objects included in each of scenes constituting the 2D image 110. This will be described in detail with reference to FIGS. 11 to 13.

In the disclosure, a depth map obtained by non-linearly changing the first depth map of the input/received 2D image 110 initially obtained by the image processing device 100 may be mentioned as the 'modified depth map' or the 'second depth map'.

In an embodiment of the disclosure, the image processing device 100 may perform 3D conversion for the 2D image 110, based on the depth map (e.g., the first depth map) or the modified depth map (e.g., the second depth map).

In an embodiment of the disclosure, the image processing device 100 may obtain the 3D image 120 which is converted from the 2D image 110. In an embodiment of the disclosure, the image processing device 100 may control the display to output the 3D image 120.

In an embodiment of the disclosure, the image processing device 100 may control the display to generate and output a user interface (UI) that indicates the content class corresponding to each of scenes constituting the 3D image 120 converted from the 2D image 110 and a stereoscopic effect of each of scenes. The user may figure out the content class of each of scenes of the 3D image 120 being viewed and a degree of stereoscopic effect of each of scenes, through the UI provided by the image processing device 100.

According to an embodiment of the disclosure, the image processing device 100 may dynamically apply a depth estimation model in real time, analyze objects included in each of scenes, and non-linearly change a depth map based on analysis of a content class of an input 2D image, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

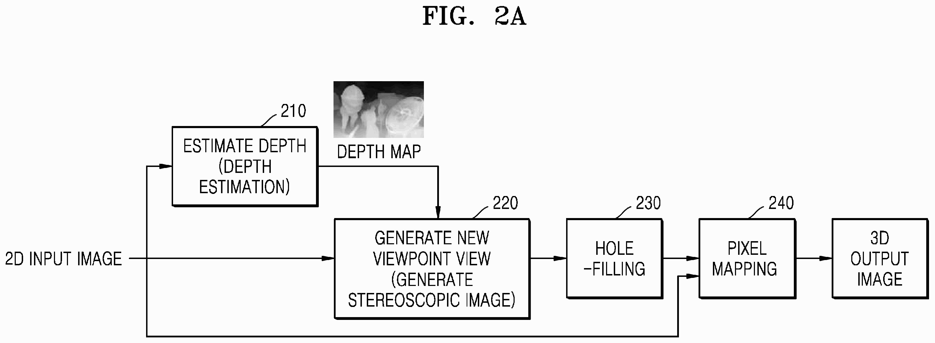

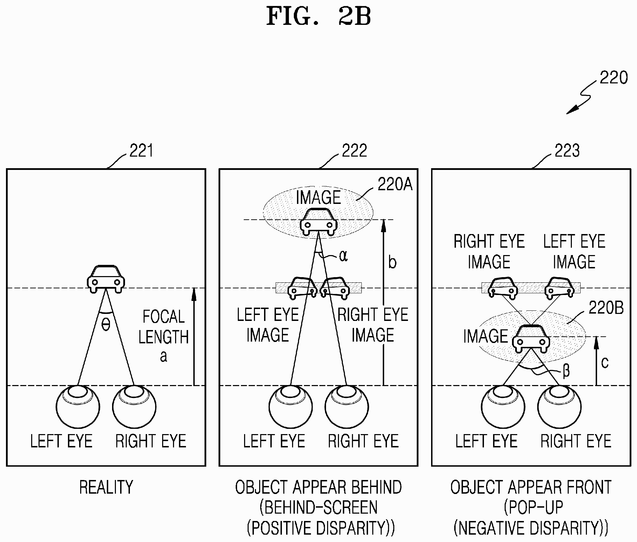

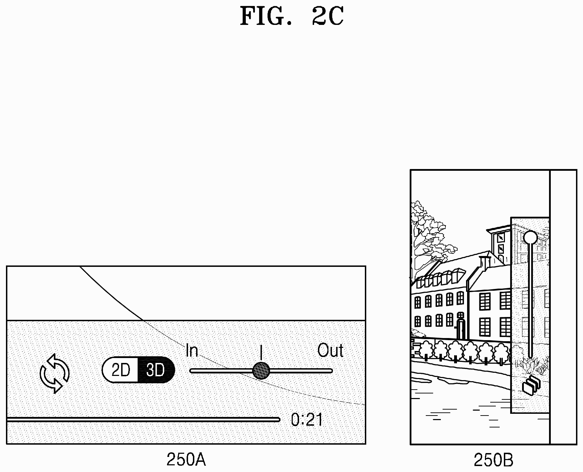

FIGS. 2A, 2B, and 2C are diagrams for describing operations, performed by an image processing device, of performing 3D conversion for a 2D input image according to an example.

FIG. 2A is a diagram for describing an operation, performed by the image processing device, of performing 3D conversion for the 2D input image according to an example.

Referring to FIG. 2A, the image processing device may receive the 2D image and perform 3D conversion according to blocks 210 to 240 to output a 3D image.

When the 2D image is input, the image processing device may estimate (210) depths of objects included in an image based on the input 2D image, generate (220) a new viewpoint view based on a depth map which is a depth estimation result, perform hole-filling (230) of filling an empty area (e.g., an occlusion area) around the objects in the image according to the generated new viewpoint view, and perform pixel mapping (240) in which pixels of a display are disposed to match the hole-filled new viewpoint view generated in real time.

FIG. 2B is a diagram for describing, in detail, a process 220 in which the image processing device generates the new viewpoint view according to an example.

Referring to FIG. 2B, the principle of generating the new viewpoint view is to generate a stereoscopic image from the 2D image based on the depth map. The stereoscopic image is an image in which two images with two different viewpoints are combined using position disparity of objects in each of images viewed in the left eye and right eye, and causes an optical illusion such that a viewer feels the depth of the objects in the image.

For example, in the case of behind-screen (positive disparity) 222 (focal length a< focal length b), the image processing device may generate a stereoscopic image 220A by generating and combining an image corresponding to the left eye and an image corresponding to the right eye such that an angle $\alpha$ between the left eye and the right eye is less than an angle $\theta$ between both eyes of a reality 221, in order to make an object appear behind its real position, based on the depth map obtained in 210.

For example, in the case of pop-up (negative disparity) 223 (focal length a> focal length c), the image processing device may generate a stereoscopic image 220B by generating and combining the image corresponding to the left eye and the image corresponding to the right eye such that an angle $\beta$ between the left eye and the right eye is greater than the angle $\theta$ between both eyes of the reality 221, in order to make an object pop up over its real position, based on the depth map obtained in 210.

FIG. 2C is a diagram for describing a UI for a slide type of adjusting stereoscopic effect, provided by the image processing device according to an example.

Referring to FIG. 2C, a user may adjust the intensity of stereoscopic effect of a 3D converted image, by using the UI 250A or the UI 250B provided by the image processing device. However, these types of UIs are only for manually adjusting the stereoscopic effect of the entire image when the user is viewing the image, but not used to automatically adjust the stereoscopic effect of the image to be suitable for a content class of the image or a content class of each of scenes when scenes of the image change, as in an embodiment of the disclosure.

The disclosure provides a method of dynamically applying a depth estimation model, by using cloud-based AI technology or on-device-based AI technology, based on a result of analyzing a content class of an input 2D image in the depth estimation process 210, so as to improve the accuracy of depth estimation by reducing depth estimation errors.

The disclosure provides a method of non-linearly changing the depth map and controlling the stereoscopic effect, based on the result of analyzing the content class of the input 2D image in the process 220 of generating the new viewpoint view, so as to improve the satisfaction and convenience of the user using a 3D display.

However, the effects that may be obtained from the disclosure are not limited to the effects mentioned above, and other effects not mentioned will be clearly understood by one of ordinary skill in the art from the description below.

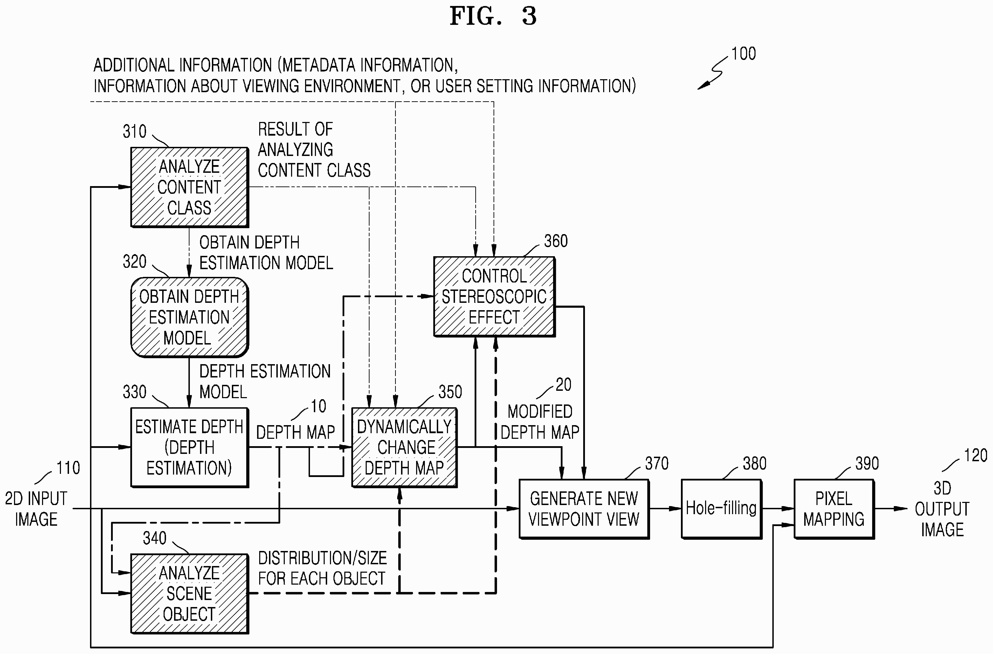

FIG. 3 is a schematic diagram for describing an operation, performed by the image processing device 100, of performing 3D conversion for the 2D input image 110 according to an embodiment of the disclosure.

Referring to FIG. 3, in block 310, the image processing device 100 according to an embodiment of the disclosure may analyze a content class of the 2D input image 110. This will be described in detail with reference to FIG. 5.

The image processing device 100 may use a result of analyzing the content class obtained in block 310 to obtain a depth estimation model corresponding to the 2D input image 110 in real time in block 320. The image processing device 100 may use the result of analyzing the content class obtained in block 310 to non-linearly change a depth map in block 350. The image processing device 100 may use the result of analyzing the content class obtained in block 310 to control a stereoscopic effect of the 2D input image 110 in block 360.

In block 320, the image processing device 100 according to an embodiment of the disclosure may obtain the depth estimation model corresponding to the 2D input image 110 in real time based on the result of analyzing the content class of the 2D input image 110.

The image processing device 100 may obtain the depth estimation model corresponding to the 2D input image 110 in real time through a cloud server, based on the result of analyzing the content class of the 2D input image 110. The image processing device 100 may obtain the depth estimation model corresponding to the 2D input image 110 in real time through on-device learning, based on the result of analyzing the content class of the 2D input image 110. This will be described in detail with reference to FIGS. 6 to 8.

The image processing device 110 may use the depth estimation model corresponding to the 2D input image 110 obtained in block 320 to obtain the depth map of the 2D input image 110 by performing depth estimation in block 330.

Block 330 may operate similarly to block 210 of FIG. 2A. The descriptions redundant with those given with reference to FIG. 2A are omitted here.

In block 340, the image processing device 100 according to an embodiment of the disclosure may analyze sizes and distributions of objects included in each of scenes constituting the 2D input image 110, based on the 2D input image 110 and the depth map of the 2D input image 110. This will be described in detail with reference to FIG. 11.

The image processing device 100 may use a result of analyzing the sizes and distributions of objects included in each of scenes obtained in block 340 to non-linearly change the depth map in block 350. The image processing device 100 may use the result of analyzing the sizes and distributions of objects included in each of scenes obtained in block 340 to control the stereoscopic effect of the 2D input image 110 in block 360.

In block 350, the image processing device 100 according to an embodiment of the disclosure may obtain a modified depth map 20 (e.g., a second depth map) by non-linearly changing a depth map 10 (e.g., a first depth map).

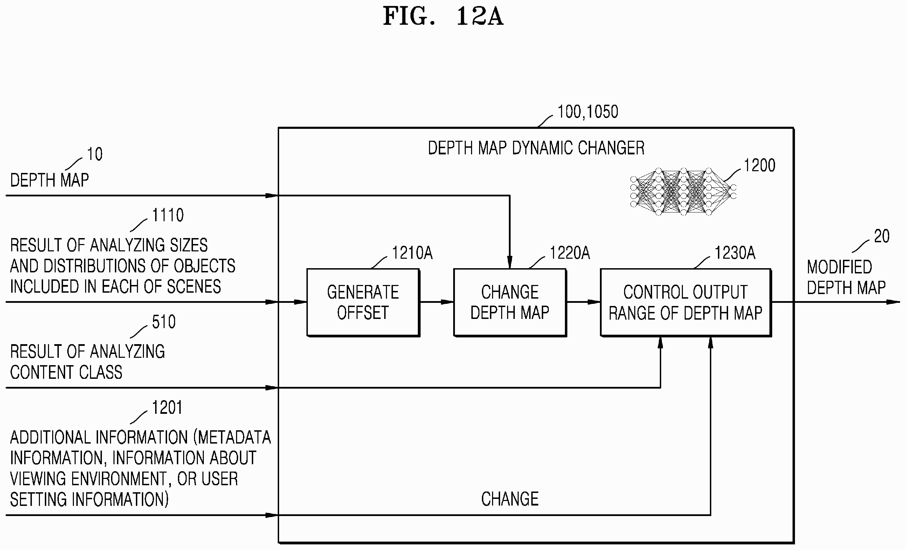

The image processing device 100 may obtain the modified depth map 20 (e.g., the second depth map) by non-linearly changing the depth map 10 (e.g., the first depth map), based on at least one of the result of analyzing the sizes and distributions of objects included in each of scenes constituting the 2D input image 110 obtained in block 340, the result of analyzing the content class of the 2D input image 110 obtained in block 310, or additional information. This will be described in detail with reference to FIGS. 12A to 13.

The image processing device 100 may use the modified depth map 20 (e.g., the second depth map) of the 2D input image 110 obtained in block 350 to generate a new viewpoint view in block 370.

In block 360, the image processing device 100 according to an embodiment of the disclosure may determine relative positions of objects included in each of scenes constituting the 2D input image 110 from a virtual convergence plane corresponding to a screen, so as to control the stereoscopic effect of the 2D input image 110.

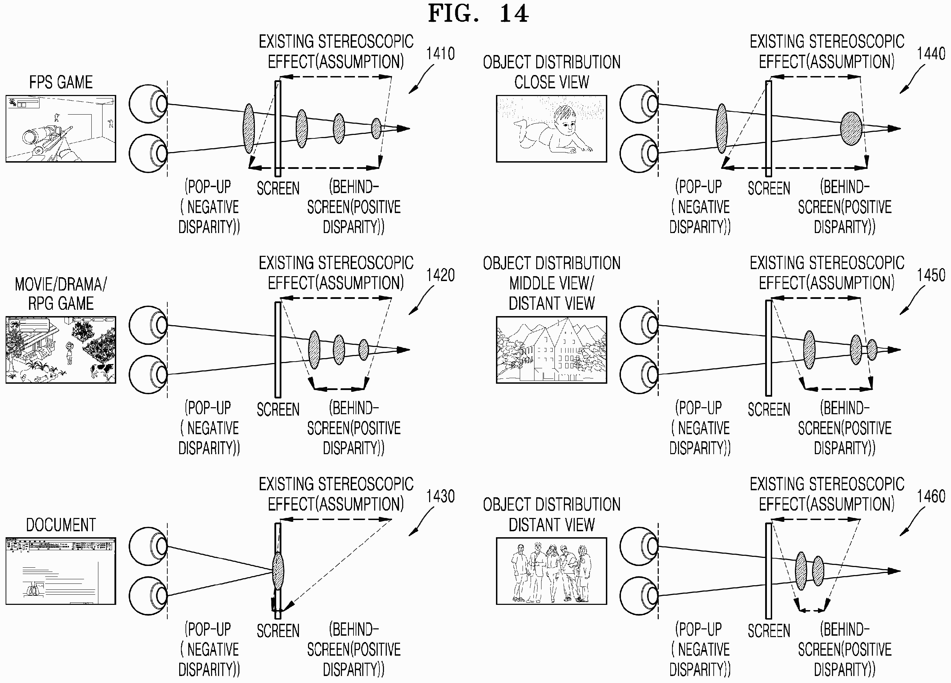

The image processing device 100 may determine relative positions of objects included in each of scenes constituting the 2D input image 110 from the virtual convergence plane corresponding to the screen, based on at least one of the results of analyzing the sizes and distributions of objects included in each of scenes constituting the 2D input image 110 obtained in block 340, the result of analyzing the content class of the 2D input image 110 obtained in block 310, or additional information. This will be described in detail with reference to FIGS. 14 to 15.

The image processing device 100 may use information about the relative positions of objects included in each of scenes constituting the 2D input image 110 from the convergence plane obtained in block 360 to generate the new viewpoint view in block 370.

Blocks 370 to 390 may operate similarly to blocks 220 to 240 of FIG. 2A. The descriptions redundant with those given with reference to FIG. 2A are omitted here.

According to blocks 310 to 390 of FIG. 3, the image processing device 100 according to an embodiment of the disclosure may obtain the 3D output image 120 by performing 3D conversion for the 2D input image 110. The image processing device 100 may control a display to output the 3D output image 120.

The disclosure provides a method of dynamically applying a depth estimation model, by using cloud-based AI technology or on-device-based AI technology, based on a result of analyzing a content class of an input 2D image in blocks 310 to 330, so as to improve the accuracy of depth estimation by reducing depth estimation errors.

The disclosure provides a method of non-linearly changing a depth map and controlling the stereoscopic effect of the 2D input image by determining the relative positions of objects included in each of scenes constituting the 2D input image from the virtual convergence plane corresponding to the screen, based on a result of analyzing a content class of the input 2D image in blocks 340 to 370, so as to improve the satisfaction and convenience of a user using a 3D display.

However, the effects that may be obtained from the disclosure are not limited to the effects mentioned above, and other effects not mentioned will be clearly understood by one of ordinary skill in the art from the description below.

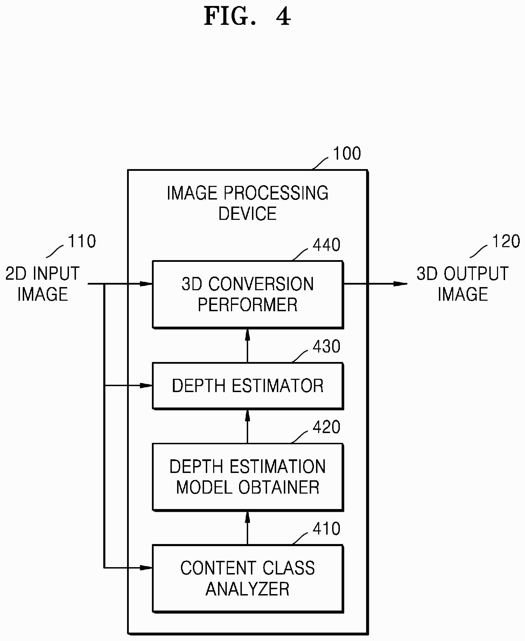

FIG. 4 is an internal block diagram of the image processing device 100 according to an embodiment of the disclosure.

Referring to FIG. 4, the image processing device 100 according to an embodiment of the disclosure may include a content class analyzer 410, a depth estimation model obtainer 420, a depth estimator 430, and a 3D conversion performer 440.

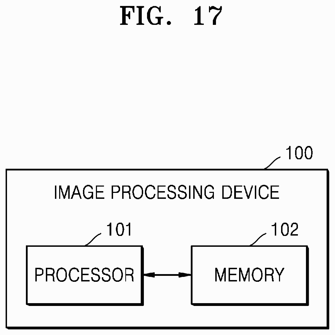

The content class analyzer 410, the depth estimation model obtainer 420, the depth estimator 430, and the 3D conversion performer 440 may be implemented through at least one processor. The content class analyzer 410, the depth estimation model obtainer 420, the depth estimator 430, and the 3D conversion performer 440 may operate according to at least one instruction stored in a memory (e.g., 102 of FIG. 17).

FIG. 4 individually shows the content class analyzer 410, the depth estimation model obtainer 420, the depth estimator 430, and the 3D conversion performer 440, but the content class analyzer 410, the depth estimation model obtainer 420, the depth estimator 430, and the 3D conversion performer 440 may be implemented through a single processor. In this case, the content class analyzer 410, the depth estimation model obtainer 420, the depth estimator 430, and the 3D conversion performer 440 may be implemented through a dedicated processor, or may be implemented through a combination of a general-purpose processor such as an application processor (AP), a central processing unit (CPU), or a graphic processing unit (GPU) and software. In addition, the dedicated processor may include a memory implementing an embodiment of the disclosure or a memory processing unit using an external memory. In addition, an AI dedicated processor such as a neural processing unit (NPU) may be designed with a hardware structure specialized in the processing of a specific AI model.

The content class analyzer 410, the depth estimation model obtainer 420, the depth estimator 430, and the 3D conversion performer 440 may be configured through a plurality of processors. In this case, the content class analyzer 410, the depth estimation model obtainer 420, the depth estimator 430, and the 3D conversion performer 440 may be implemented through a combination of dedicated processors, or may be implemented through a combination of a plurality of general-purpose processors such as APs, CPUs, or GPUs and software.

In an embodiment of the disclosure, the content class analyzer 410 may analyze a content class of the 2D input image 110. In an embodiment of the disclosure, the content class analyzer 410 may include appropriate logic, circuit, interface, and/or code that may operate to analyze the content class of the 2D input image 110. The content class analyzer 410 may analyze the content class of the 2D input image 110 by using at least one of an artificial neural network (e.g., a content class analysis model 500 of FIG. 5) trained to analyze the content class of the 2D input image 110 or a policy-based algorithm. In an embodiment of the disclosure, the content class analyzer 410 may obtain information related to a probability that the 2D input image 110 corresponds to each of predefined content classes, as a result of analyzing the content class.

In an embodiment of the disclosure, when there is a scene transition of the 2D input image 110, the content class analyzer 410 may analyze a content class of each of scenes constituting the 2D input image 110. The "scene transition" may refer to a change in scenes of an image, that is, a change from a specific scene to another scene. The result of analyzing the content class may include a result of analyzing the content class of each of the scenes constituting the 2D input image 110.

In an embodiment of the disclosure, the content class analyzer 410 may transmit the result of analyzing the content class of the 2D input image 110 to the depth estimation model obtainer 420.

In an embodiment of the disclosure, the depth estimation model obtainer 420 may receive the result of analyzing the content class of the 2D input image 110 from the content class analyzer 410.

In an embodiment of the disclosure, the depth estimation model obtainer 420 may obtain a depth estimation model corresponding to the 2D input image 110 in real time, based on the result of analyzing the content class of the 2D input image 110. In an embodiment of the disclosure, the depth estimation model obtainer 420 may include appropriate logic, circuit, interface, and/or code that may operate to obtain the depth estimation model corresponding to the 2D input image 110 in real time.

In an embodiment of the disclosure, the depth estimation model obtainer 420 may obtain the depth estimation model corresponding to the 2D input image 110 in real time from a cloud server, based on the result of analyzing the content class of the 2D input image 110.

In an embodiment of the disclosure, the depth estimation model obtainer 420 may newly train/generate/obtain one or more depth estimation models corresponding to the 2D input image 110 in real time, by using on-device learning, based on the result of analyzing the content class of the 2D input image 110.

In an embodiment of the disclosure, when there is a scene transition of the 2D input image 110, the depth estimation model obtainer 420 may obtain/generate depth estimation models respectively corresponding to the scenes constituting the 2D input image 110 in real time, based on the result of analyzing the content class of each of the scenes constituting the 2D input image 110. The depth estimation models respectively corresponding to the scenes constituting the 2D input image 110 may be the same as or different from each other. When even some of parameter values of filters used in layers constituting the depth estimation models are different, the depth estimation models may be mentioned to be different.

The depth estimation model obtained in real time from the cloud server may be dynamically applied in real time according to the result of analyzing the content class of the 2D input image 110 or a result of analyzing the content class of each of the scenes constituting the 2D input image 110 due to the scene transition, but is not updated by the depth estimation model obtainer 420 by itself. The depth estimation model obtained by using on-device learning may be dynamically applied in real time according to the result of analyzing the content class of the 2D input image 110 or the result of analyzing the content class of each of the scenes constituting the 2D input image 110 due to the scene transition, and may be updated in real time by the depth estimation model obtainer 420 by itself.

In an embodiment of the disclosure, the depth estimation model obtainer 420 may transmit the obtained/generated one or more depth estimation models to the depth estimator 430.

In an embodiment of the disclosure, the depth estimator 430 may receive the one or more depth estimation models from the depth estimation model obtainer 420.

In an embodiment of the disclosure, the depth estimator 430 may obtain the depth map 10 (e.g., the first depth map) of the 2D input image 110 by performing depth estimation on the 2D input image 110 by using the received one or more depth estimation models. In an embodiment of the disclosure, the depth estimator 430 may include appropriate logic, circuit, interface, and/or code that may operate to obtain the depth map 10 (e.g., the first depth map) of the 2D input image 110.

In an embodiment of the disclosure, when there is a scene transition of the 2D input image 110, the depth estimator 430 may obtain the depth map 10 (e.g., the first depth map) of the 2D input image 110 by applying the depth estimation models corresponding to each of the scenes constituting the 2D input image 110 and performing depth estimation on each of the scenes constituting the 2D input image 110.

In an embodiment of the disclosure, the depth estimator 430 may transmit the obtained depth map 10 (e.g., the first depth map) to the 3D conversion performer 440.

In an embodiment of the disclosure, the 3D conversion performer 440 may receive the depth map 10 (e.g., the first depth map) of the 2D input image 110 from the depth estimator 430.

In an embodiment of the disclosure, the 3D conversion performer 440 may obtain the 3D output image 120 by performing 3D conversion for the 2D input image 110 based on the received depth map 10 (e.g., the first depth map). In an embodiment of the disclosure, the 3D conversion performer 440 may include appropriate logic, circuit, interface, and/or code that may operate to obtain the 3D output image 120 by performing 3D conversion for the 2D input image 110.

The 3D conversion performer 440 may obtain the 3D output image 120 from the 2D input image 110 by generating a new viewpoint view, performing hole filling, and performing pixel mapping based on the depth map 10 (e.g., the first depth map). Processes of generating the new viewpoint view, performing hole filling, and performing pixel mapping may operate similarly to blocks 220 to 240 of FIG. 2A. The descriptions redundant with those given with reference to FIG. 2A are omitted here.

The image processing device 100 according to an embodiment of the disclosure may provide a method of dynamically applying a depth estimation model in real time, based on a result of analyzing a content class of a 2D input image, and thus, depth estimation errors may be reduced, thereby improving the accuracy of depth estimation, and improving the satisfaction and convenience of a user using a 3D display.

However, the effects that may be obtained from the disclosure are not limited to the effects mentioned above, and other effects not mentioned will be clearly understood by one of ordinary skill in the art from the description below.

Specific operations in which the image processing device 100 according to an embodiment of the disclosure performs 3D conversion for the input 2D image are described in more detail through the drawings and descriptions thereof described below.

FIG. 5 is a diagram for describing a process, performed by the image processing device 100, of analyzing a content class according to an embodiment of the disclosure.

Referring to FIG. 5, the image processing device 100 according to an embodiment (e.g., the content class analyzer 410 of the image processing device 100) may analyze a content class of the 2D input image 110. The image processing device 100 may obtain a result 510 of analyzing the content class of the 2D input image 110 by analyzing a probability that the 2D input image 110 corresponds to each of predefined content classes.

The predefined content classes may include movie, drama, FPS game, RPG, RTS game, MMORPG, document, complex content, presentation material, etc., but are not limited thereto.

According to an embodiment of the disclosure, the result 510 of analyzing the content class may include information related to the probability that the 2D input image 110 corresponds to each of predefined content classes. For example, the result 510 of analyzing the content class may include information indicating a specific content class with the highest probability that the 2D input image 110 corresponds to among predefined content classes. For example, the result 510 of analyzing the content class may include probability values indicating the probability that the 2D input image 110 corresponds to each of predefined content classes.

According to an embodiment of the disclosure, the image processing device 100 may analyze the content class of the 2D input image 110 by using the content class analysis model 500.

The content class analysis model 500 may refer to an artificial neural network model trained to predict the content class of the 2D image 110. For example, the content class analysis model 500 may refer to the artificial neural network model trained to predict the content class of the 2D image 110 by using technology such as CNN, DNN, RNN, RBM, DBN, BRDNN or deep Q-network, HOG, SHIFT, LSTM, SVM, SoftMax, etc., but is not limited thereto.

The content class analysis model 500 may receive the 2D input image 110 as input data and output the result 510 of analyzing the content class of the 2D input image 110 as output data. The image processing device 100 may obtain the content class analysis model 500 trained from a cloud server. The image processing device 100 may newly train/generate/obtain the content class analysis model 500 by using on-device learning.

According to an embodiment of the disclosure, the image processing device 100 may analyze the content class of the 2D input image 110 by using a policy-based algorithm. The policy-based algorithm for analyzing the content class of the 2D image 110 may be predefined/set by a manufacturer of the image processing device 100.

According to an embodiment of the disclosure, the image processing device 100 may analyze the content class of the 2D input image 110 by mixing the content class analysis model 500 and the policy-based algorithm.

For example, when the 2D input image 110 is a drama, the image processing device 100 may obtain a result of analyzing the content class including information indicating that the content class with the highest probability that the 2D input image 110 corresponds to is the drama or probability values indicating that the 2D input image 110 corresponds to each of movie, drama, FPS game, RPG, RTS game, MMORPG, document, complex content, and presentation material, by using the content class analysis model 500 and the policy-based algorithm.

According to an embodiment of the disclosure, when there is a scene transition of the 2D input image 110, the image processing device 100 may analyze the content class of the 2D input image 110 by analyzing a content class of each of scenes constituting the 2D input image 110.

For example, the image processing device 100 may detect the scene transition of the 2D input image 110. When the image processing device 100 detects the scene transition, the image processing device 100 may analyze the content class of each of the scenes constituting the 2D input image 110.

In this case, the result 510 of analyzing the content class may include information related to a probability that the scenes constituting the 2D input image 110 respectively correspond to the predefined specific content classes. For example, the result 510 of analyzing the content class may include information indicating a specific content class with the highest probability that each of the scenes constituting the 2D input image 110 corresponds to among the predefined content classes. For example, the result 510 of analyzing the content class may include probability values that the scenes constituting the 2D input image 110 respectively correspond to the predefined content classes.

For example, it may be assumed that the 2D input image 110 is a complex image including four scenes S1, S2, S3, and S4, and content classes of the scenes S1, S2, S3, and S4 are respectively drama, document, drama, and FPS game. The image processing device 100 may detect a scene transition S1->S2->S3->S4 of the 2D input image 110. The image processing device 100 may obtain a result of analyzing the content class including information indicating that content classes with the highest probability that the scenes S1, S2, S3, and S4 correspond to are respectively drama, document, drama, and FPS game, or probability values indicating that each of the scenes S1, S2, S3, and S4 corresponds to movie, drama, FPS game, RPG, RTS game, MMORPG, document, complex content, or presentation material, etc., by using the content class analysis model 500 or the policy-based algorithm. It is described with reference to FIG. 5 that the 2D input image 110 includes four scenes, but this is only an example, and the 2D input image 110 may include numerous scenes or one scene.

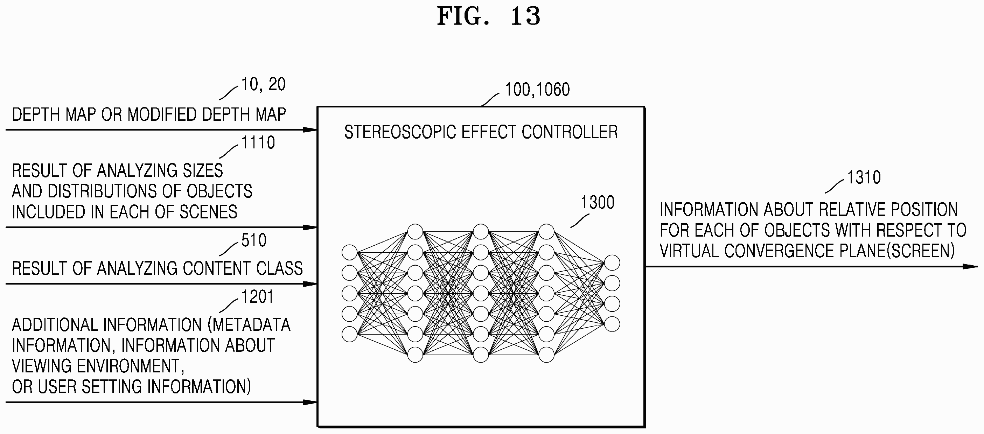

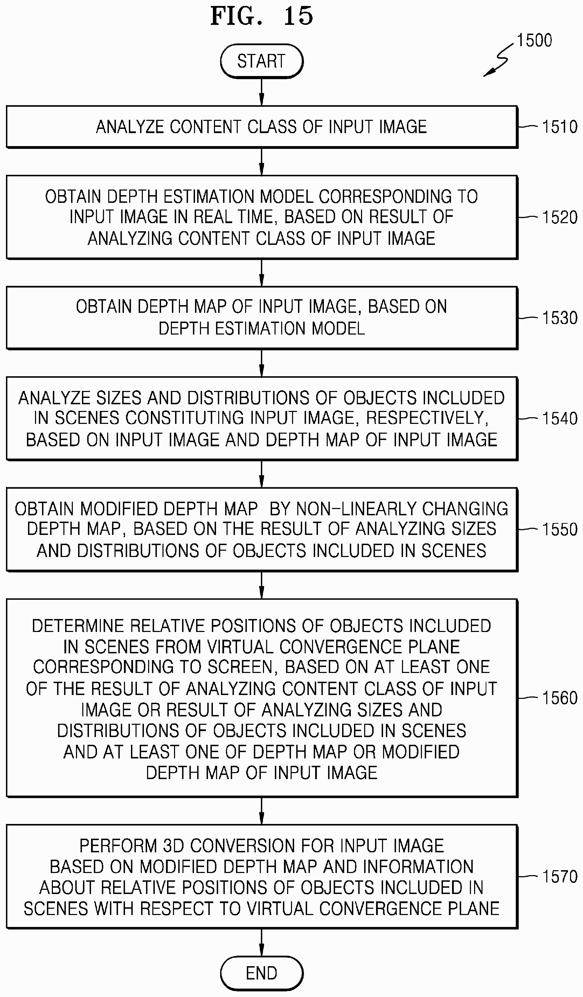

The image processing device 100 may use the result 510 of analyzing the obtained content classes to obtain a depth estimation model corresponding to the 2D input image 110 in real time (see FIGS. 6 to 8), to non-linearly change a depth map (see FIGS. 11 and 13), to control a stereoscopic effect of the 2D input image 110 (see FIGS. 14 and 15).

The image processing device 100 according to an embodiment of the disclosure may provide a method of dynamically applying the depth estimation model and non-linearly changing the depth map, based on a result of analyzing a content class of a 2D input image, and thus, depth estimation errors may be reduced, thereby improving the accuracy of depth estimation, and improving the satisfaction and convenience of a user using a 3D display.

However, the effects that may be obtained from the disclosure are not limited to the effects mentioned above, and other effects not mentioned will be clearly understood by one of ordinary skill in the art from the description below.

The 'depth estimation model' may refer to an artificial neural network model trained to predict depth information of each of pixels constituting the 2D image 110. For example, the depth estimation model may refer to the artificial neural network model trained to predict the depth information of each of pixels constituting the 2D image 110 by using technology such as CNN, DNN, RNN, RBM, DBN, BRDNN or deep Q-network, HOG, SHIFT, LSTM, SVM, SoftMax, etc., but is not limited thereto.

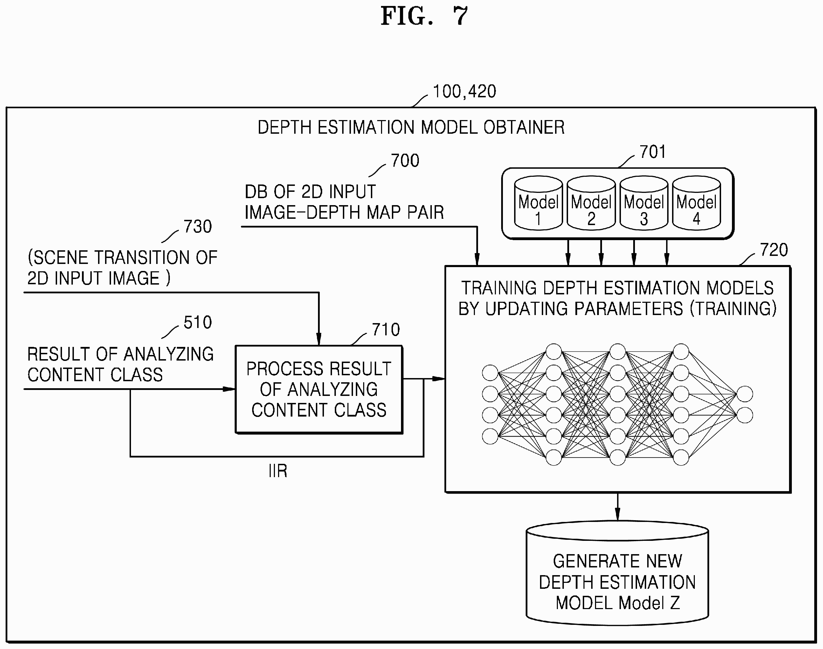

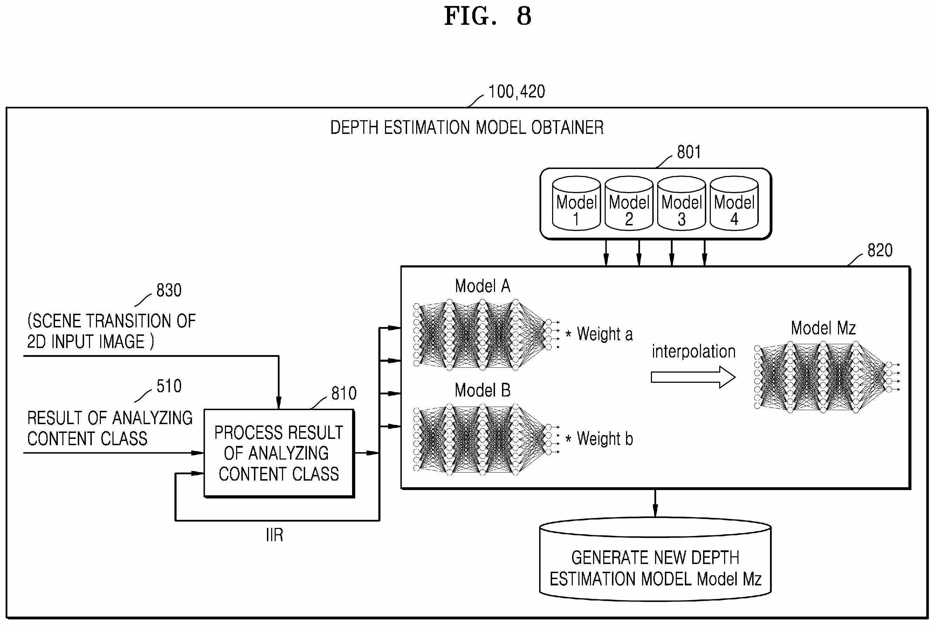

Hereinafter, an operation, performed by the image processing device 100 according to an embodiment of the disclosure, of obtaining a depth estimation model by using cloud-based AI technology is described with reference to FIG. 6, and hereinafter, an operation, performed by the image processing device 100 according to an embodiment of the disclosure, of obtaining the depth estimation model by using on-device-based AI technology is described with reference to FIGS. 7 and 8.

FIG. 6 is a diagram for describing a process, performed by the image processing device 100, of obtaining a depth estimation model corresponding to the 2D input image 110 from a cloud server 600 according to an embodiment.

In the case of cloud-based AI technology, a neural network model itself, training of the neural network model, may be performed by a cloud server. In an embodiment of the disclosure, the image processing device 100 may, in real time, obtain one or more depth estimation models corresponding to the 2D image 110 or corresponding to each of the scenes constituting the 2D image 110, from the cloud server 600, based on the result of analyzing the content class of the 2D image 110.

In an embodiment of the disclosure, depth estimation models for each content class may be previously trained by the cloud server 600 by using a training database of a 2D image-depth map pair for each predefined content class. This may be expressed as depth estimation models trained offline. The depth estimation models trained offline may be mounted in the image processing device 100 or a server.

In an embodiment of the disclosure, the image processing device 100 may request the cloud server 600 to transmit the depth estimation models trained offline for each content class, and when there is a request from the image processing device 100, the cloud server 600 may transmit only some requested depth estimation models to the image processing device 100. In an embodiment of the disclosure, the image processing device 100 may previously receive the depth estimation models trained offline for each content class from the cloud server 600 and store the depth estimation models in the image processing device 100, and may immediately use some necessary depth estimation models without making a separate request from the cloud server 600.

For example, depth estimation models Model 1, Model 2, Model 3, and Model 4 trained offline may be stored in the cloud server 600 or the image processing device 100. The depth estimation model, Model 1, may be a model previously trained using a training database of a movie or drama image-depth map pair, the depth estimation model, Model 2, may be a model previously trained using a training database of an FPS game image-depth map pair, the depth estimation model, Model 3, may be a model previously trained using a training database of a document-depth map pair, and the depth estimation model, Model 4, may be a model previously trained using a training database of a complex content-depth map pair.

Referring to FIG. 6, in 610, the image processing device 100 according to an embodiment of the disclosure (e.g., the depth estimation model obtainer 420 of the image processing device 100) may process the result 510 of analyzing the content class received from the content class analyzer 410.

For example, the image processing device 100 may process the result 510 of analyzing the content class by using an infinite impulse response (IIR) filter. Probability values indicating the probability that each of scenes constituting the 2D input image 110 corresponds to each of predefined content classes and included in the result 510 of analyzing the content class may be a probability value sequence that changes over time. The image processing device 100 may calculate a cumulative weighted average for an arbitrary time (e.g., a time interval corresponding to a certain number of frames, a time interval in which a scene transition occurs, etc.) by applying a specific weight to the result 510 of analyzing the content class, which is the probability value sequence that changes over time, by using a moving average method or an exponential weighted moving average method. In this regard, the image processing device 100 may adjust how much an average value up to now is affected by new probability value data with a weight. The depth estimation model obtainer 420 may reduce variability of input probability value data by processing the result 510 of analyzing the content class by using the IIR filter, thereby reducing a flicker phenomenon and improving stability.

In 620, the image processing device 100 (e.g., the depth estimation model obtainer 420 of the image processing device 100) according to an embodiment of the disclosure may determine/predict a content class with the highest probability that the 2D input image 110 corresponds to, based on the processed result 510 of analyzing the content class.

In 630, the image processing device 100 according to an embodiment of the disclosure may obtain one or more depth estimation models corresponding to the content class with the highest probability that the 2D input image 110 corresponds to, in real time from the cloud server 600.

The image processing device 100 according to an embodiment of the disclosure may receive and previously store depth estimation models for each content class previously trained by the cloud server 600 from the cloud server 600. The image processing device 100 may obtain a depth estimation model corresponding to the 2D input image 110 in real time, by selecting one depth estimation model corresponding to the content class with the highest probability that the 2D input image 110 corresponds to, from among previously stored depth estimation models for each content class.

For example, the image processing device 100 may select/obtain a depth estimation model Mx corresponding to the 2D input image 110 according to [Equation 1].

[Equation 1]

$$M_x = \max(P_{M1}, P_{M2}, P_{M3}, P_{M4}, \ldots P_{Mn}) \ (n \ being \ a \ positive \ number)$$

n may denote the total number of depth estimation models for each content class obtained by the image processing device 100 from the cloud server 600. $P_{Mn}$ may denote a probability that the 2D input image 110 corresponds to a content class corresponding to each of depth estimation models M1, M2, M3, M4, ,,, Mn, and may correspond to data included in the result 510 of analyzing the content class and processed in 610.

For example, the image processing device 100 may determine/predict the content class with the highest probability that the 2D input image 110 corresponds to as a drama, based on the processed result 510 of analyzing the content class. The image processing device 100 may select/obtain, from the cloud server 600, one depth estimation model M1, i.e., Model 1, corresponding to the drama, which is the content class with the highest probability that the 2D input image 110 corresponds to.

The image processing device 100 according to an embodiment of the disclosure may obtain one or more corresponding depth estimation models in real time, with respect to each of scenes constituting the 2D input image 110, from the cloud server 600.

The image processing device 100 according to an embodiment of the disclosure may obtain one or more corresponding depth estimation models in real time, with respect to each of the scenes constituting the 2D input image 110, by selecting one or more depth estimation models corresponding to the content classes with the highest probability that each of scenes constituting the 2D input image 110 corresponds to, from among previously stored depth estimation models for each content class.

Accordingly, the image processing device 100 may dynamically apply depth estimation models for each of the scenes according to the content class of each of the scenes constituting the 2D input image 110, rather than applying a single depth estimation model to the 2D input image 110. In particular, when a 2D image including various scenes with different content classes is input, the image processing device 100 may reduce errors in depth estimation and improve the accuracy of depth estimation.

For example, when a scene transition 640 of the 2D input image 110 is detected, in 610, the image processing device 100 may process the result 510 of analyzing the content class by initializing cumulative content class analysis result data. The image processing device 100 may initialize the cumulative content class analysis result data whenever there is the scene transition 640 of the 2D input image 110. In 620, the image processing device 100 may determine/predict content classes with the highest probability that each of the scenes constituting the 2D input image 110 corresponds to, based on the processed result 510 of analyzing the content class.

In 630, the image processing device 100 may obtain the one or more corresponding depth estimation models in real time, with respect to each of the scenes constituting the 2D input image 110, from the cloud server 600.

The image processing device 100 may obtain depth estimation models respectively corresponding to the scenes constituting the 2D input image 110 in real time, by selecting one or more depth estimation models corresponding to the content class with the highest probability that each of the scenes corresponds to, with respect to each of the scenes constituting the 2D input image 110, from among previously stored depth estimation models for each content class.

When content classes with the highest probability that each of the scenes constituting the 2D input image 110 corresponds to are the same, depth estimation models respectively corresponding to the scenes may be the same, and when content classes with the highest probability that each of the scenes corresponds to are different, depth estimation models respectively corresponding to the scenes may be different.

For example, it may be assumed that the 2D input image 110 is a complex image including the four scenes S1, S2, S3, and S4, and content classes of the scenes S1, S2, S3, and S4 are respectively drama, document, drama, and FPS game. The image processing device 100 may detect a scene transition S1->S2->S3->S4 of the 2D input image 110. From among the depth estimation models Model 1, Model 2, Model 3, and Model 4 obtained from the cloud server 600, the image processing device 100 may select/obtain the depth estimation model, Model 1, as a depth estimation model corresponding to the 'drama' with the highest probability that the scene S1 corresponds to, select/obtain the depth estimation model, Model 4, as a depth estimation model corresponding to the 'document' with the highest probability that the scene S2 corresponds to, select/obtain the depth estimation model, Model 1, as a depth estimation model corresponding to the 'complex content' with the highest probability that the scene S3 corresponds to, and select/obtain the depth estimation model, Model 2, as a depth estimation model corresponding to the 'FPS game' with the highest probability that the scene S4 corresponds to. The image processing device 100 may select/obtain in real time the one or more depth estimation models Model 1, Model 2, Model 1, and Model 4 respectively corresponding to the scenes S1, S2, S3, and S4 constituting the 2D input image 110.

The image processing device 100 may use the obtained one depth estimation model corresponding to the 2D input image 110 or the one or more depth estimation models corresponding to the scenes constituting the 2D input image 100 to obtain the depth map 10 (e.g., the first depth map) of the 2D input image 110.

For example, the image processing device 100 may obtain the depth map 10 (e.g., the first depth map) of the 2D input image 110 by using the obtained depth estimation model, Model 1, corresponding to the 2D input image 110.

For example, the image processing device 100 may obtain the depth map 10 (e.g., the first depth map) of the 2D input image 110, by obtaining a depth map of the scene S1 by using the obtained depth estimation model, Model 1, corresponding to the scene S1, obtaining a depth map of the scene S2 by using the obtained depth estimation model, Model 4, corresponding to the scene S2, obtaining a depth map of the scene S3 by using the obtained depth estimation model, Model 1, corresponding to the scene S3, and obtaining a depth map of the scene S4 by using the obtained depth estimation model, Model 2, corresponding to the scene S4.

FIG. 6 shows only four depth estimation models for each content class, but this is only an example, and the image processing device 100 may obtain fewer or more depth estimation models than 4 for each content class from the cloud server 600. In addition, it is described with reference to FIG. 6 that the 2D input image 110 includes four scenes, but this is only an example, and the 2D input image 110 may include numerous scenes or one scene.

The image processing device 100 according to an embodiment of the disclosure may provide a method of dynamically applying a depth estimation model in real time, by using cloud-based AI technology, according to the content class of the input 2D image or a content class for each of scenes of the input 2D image, and thus, depth estimation errors may be reduced, thereby improving the accuracy of depth estimation, and improving the satisfaction and convenience of a user using a 3D display.

However, the effects that may be obtained from the disclosure are not limited to the effects mentioned above, and other effects not mentioned will be clearly understood by one of ordinary skill in the art from the description below.

FIG. 7 is a diagram for describing a process, performed by the image processing device 100, of obtaining a depth estimation model by using on-device learning according to an embodiment of the disclosure.

In the case of on-device-based AI technology, data may be processed by the edge device itself in real time, and thus, training of the neural network model and inference using the neural network model may be performed by the edge device. In an embodiment of the disclosure, the image processing device 100 may, in real time, generate/obtain one or more depth estimation models corresponding to the 2D image 110 or corresponding to each of the scenes constituting the 2D input image 110, by collecting data and training the depth estimation models by itself without the cloud server 600, that is, using on-device learning, based on a result of analyzing a content class of the 2D input image 110.

The image processing device 100 may use a general-purpose processor such as a CPU and a GPU mounted in the image processing device 100, or a dedicated processor such as a NPU to train/generate a new depth estimation model by using on-device learning.

Referring to FIG. 7, in 710, the image processing device 100 (e.g., the depth estimation model obtainer 420 of the image processing device 100) according to an embodiment of the disclosure may process the result 510 of analyzing the content class received from the content class analyzer 410. For example, the image processing device 100 may process the result 510 of analyzing the content class by using an IIR filter. The descriptions redundant with those given with reference to 610 of FIG. 6 are omitted here.

In 720, the image processing device 100 according to an embodiment of the disclosure may obtain a depth estimation model Z corresponding to the 2D input image 110 in real time, by updating parameters of depth estimation models 701 mounted in the image processing device 100 or a server and newly training the depth estimation models 701, based on the processed result 510 of analyzing the content class.

The depth estimation models 701 for each content class may be previously trained offline by using a training database of a 2D image-depth map pair for each predefined content class, and may be mounted in the image processing device 100 or the server.

In an embodiment of the disclosure, the image processing device 100 may request a cloud server to transmit depth estimation models trained offline for each content class so as to obtain a newly trained depth estimation model, and when there is a request from the image processing device 100, the cloud server may transmit only some requested depth estimation models to the image processing device 100. In an embodiment of the disclosure, the image processing device 100 may previously receive the depth estimation models trained offline for each content class from the cloud server and store the depth estimation models in the image processing device 100 so as to obtain a newly trained depth estimation model, and may immediately use some necessary depth estimation models without making a separate request from the cloud server.

For example, the depth estimation models Model 1, Model 2, Model 3, and Model 4 trained offline may be stored in the cloud server or the image processing device 100. The depth estimation model Model 1 may be a model previously trained using a training database of a movie or drama image-depth map pair, the depth estimation model, Model 2, may be a model previously trained using a training database of an FPS game image-depth map pair, the depth estimation model Model 3 may be a model previously trained using a training database of a document-depth map pair, and the depth estimation model Model 4 may be a model previously trained using a training database of a complex content-depth map pair.

The image processing device 100 may determine/predict a content class with the highest probability corresponding to the 2D input image 110, based on the processed result 510 of analyzing the content class.

The image processing device 100 may train/generate the depth estimation model Model Z corresponding to the 2D input image 110 in real time, by updating the parameters of the depth estimation model Model X corresponding to the content class with the highest probability corresponding to the 2D input image 110 among the depth estimation models 701, with training data 700 including a pair of the 2D input image 110 and the depth map 10 (e.g., the first depth map) of the 2D input image 110 generated by the image processing device 100.

The image processing device 100 may obtain the depth map 10 (e.g., the first depth map) of the 2D input image 110 output from the depth estimation models 701, by inputting the 2D input image 110 included in the training data 700 into the depth estimation model Model X, through a forward propagation process.

The image processing device 100 may calculate a loss and adjust the parameter of the depth estimation model Model X such that the loss is minimized, by comparing the depth map 10 (e.g., the first depth map) of the 2D input image 110 with the 2D input image 110 included in the training data 700, through a backward propagation process. For example, the image processing device 100 may calculate an inclination of the loss by differentiating the loss with the parameter of the depth estimation model Model X. The image processing device 100 may update the parameter of the depth estimation model Model X in a direction in which the calculated inclination of the loss decreases, and may repeat updating until the loss is minimized. For example, the image processing device 100 may optimize the parameters of the depth estimation models 701 in the image processing device 100 by using a gradient descent algorithm. The image processing device 100 may repeatedly update the parameter of the depth estimation model Model X such that the loss is minimized through several iterations.

For example, based on the processed result 510 of analyzing the content class, the image processing device 100 may determine/predict the content class with the highest probability that the 2D input image 110 corresponds to is a drama. The image processing device 100 may obtain the depth estimation model Model Z corresponding to the 2D input image 110 in real time, by updating the parameter of the depth estimation model Model 1 corresponding to the 'drama' which is the content class with the highest probability corresponding to the 2D input image 110 among the depth estimation models 701 in the image processing device 100, through the forward propagation process and the backward propagation process, by using the training data 700 including the pair of the 2D input image 110 and the depth map 10 (e.g., the first depth map) of the 2D input image 110.

The image processing device 100 according to an embodiment may obtain one or more corresponding depth estimation models in real time, with respect to each of scenes constituting the 2D input image 110, by using on-device learning.

The image processing device 100 according to an embodiment may obtain one or more corresponding depth estimation models in real time, among depth estimation models for each content class, with respect to each of scenes constituting the 2D input image 110, by updating parameters of one or more depth estimation models corresponding to content classes with the highest probability that each of the scenes constituting the 2D input image 110 corresponds to.

Accordingly, the image processing device 100 may dynamically apply depth estimation models for each of the scenes according to the content class of each of the scenes constituting the 2D input image 110, rather than applying a single depth estimation model to the 2D input image 110. In particular, when a 2D image including various scenes with different content classes is input, the image processing device 100 may reduce errors in depth estimation and improve the accuracy of depth estimation.

For example, when a scene transition 730 of the 2D input image 110 is detected, in 710, the image processing device 100 may process the result 510 of analyzing the content class by initializing cumulative content class analysis result data. The image processing device 100 may initialize the cumulative content class analysis result data whenever there is the scene transition 730 of the 2D input image 110. In 720, the image processing device 100 may determine/predict content classes with the highest probability that each of the scenes constituting the 2D input image 110 corresponds to, based on the processed result 510 of analyzing the content class. The image processing device 100 may obtain one or more corresponding depth estimation models in real time, with respect to each of the scenes constituting the 2D input image 110, by updating the parameters of one or more depth estimation models corresponding to the content classes with the highest probability that each of the scenes constituting the 2D input image 110 corresponds to.

For example, it may be assumed that the 2D input image 110 is a complex image including the four scenes S1, S2, S3, and S4, and content classes of the scenes S1, S2, S3, and S4 are respectively drama, document, drama, and FPS game. The image processing device 100 may detect a scene transition S1->S2->S3->S4 of the 2D input image 110. The image processing device 100 may generate/obtain a depth estimation model Model $Z_{s1}$ by updating the parameter of the depth estimation model Model 1 corresponding to the 'drama' with the highest probability that the scene S1 corresponds to, may generate/obtain a depth estimation model Model $Z_{s2}$ by updating the parameter of the depth estimation model Model 4 corresponding to the 'document' with the highest probability that the scene S2 corresponds to, may generate/obtain a depth estimation model Model $Z_{s3}$ by updating the parameter of the depth estimation model Model 3 corresponding to the 'complex content' with the highest probability that the scene S3 corresponds to, and may generate/obtain a depth estimation model Model $Z_{S4}$ by updating the parameter of the depth estimation model Model 2 corresponding to the 'FPS game' with the highest probability that the scene S4 corresponds to. The image processing device 100 may generate/obtain in real time the one or more depth estimation models Model $Z_{s1}$, Model $Z_{s2}$, Model $Z_{s3}$, and Model $Z_{s4}$ respectively corresponding to the scenes S1, S2, S3, and S4 constituting the 2D input image 110.

The image processing device 100 may use the obtained one depth estimation model corresponding to the 2D input image 110 or the one or more depth estimation models corresponding to the scenes constituting the 2D input image 100 to obtain the depth map 10 (e.g., the first depth map) of the 2D input image 110.

For example, the image processing device 100 may obtain the depth map 10 (e.g., the first depth map) of the 2D input image 110 by using the obtained depth estimation model Model Z corresponding to the 2D input image 110.

For example, the image processing device 100 may obtain the depth map 10 (e.g., the first depth map) of the 2D input image 110, by obtaining a depth map of the scene S1 by using the obtained depth estimation model Model $Z_{s1}$ corresponding to the scene S1, obtaining a depth map of the scene S2 by using the obtained depth estimation model Model $Z_{s1}$ corresponding to the scene S2, obtaining a depth map of the scene S3 by using the obtained depth estimation model Model $Z_{s3}$ corresponding to the scene S3, and obtaining a depth map of the scene S4 by using the obtained depth estimation model Model $Z_{s4}$ corresponding to the scene S4.

FIG. 7 shows only four depth estimation models for each content class, but this is only an example, and fewer or more depth estimation models than 4 for each content class may be stored in the image processing device 100. In addition, it is described with reference to FIG. 7 that the 2D input image 110 includes four scenes, but this is only an example, and the 2D input image 110 may include numerous scenes or one scene.

The image processing device 100 according to an embodiment of the disclosure may provide a method of dynamically applying a depth estimation model in real time, by using on-device AI technology, according to the content class of the input 2D image or a content class for each of scenes of the input 2D image, and thus, depth estimation errors may be reduced, thereby improving the accuracy of depth estimation, and improving the satisfaction and convenience of a user using a 3D display.

However, the effects that may be obtained from the disclosure are not limited to the effects mentioned above, and other effects not mentioned will be clearly understood by one of ordinary skill in the art from the description below.

FIG. 8 is a diagram for describing a process, performed by the image processing device 100, of obtaining a depth estimation model by using on-device learning according to an embodiment of the disclosure.

Referring to FIG. 8, in 810, the image processing device 100 (e.g., the depth estimation model obtainer 420 of the image processing device 100) according to an embodiment of the disclosure may process the result 510 of analyzing the content class received from the content class analyzer 410. For example, the image processing device 100 may process the result 510 of analyzing the content class by using an IIR filter. The descriptions redundant with those given with reference to 710 of FIG. 7 are omitted here.

In 820, the image processing device 100 according to an embodiment of the disclosure may generate/obtain a depth estimation model Mz corresponding to the 2D input image 110 in real time, by interpolating depth estimation models 801 mounted in the image processing device 100 or a cloud server, based on the processed result 510 of analyzing the content class.

The depth estimation models 801 for each content class may be previously trained offline by using a training database of a 2D image-depth map pair for each predefined content class, and may be mounted in the image processing device 100 or the cloud server.

In an embodiment of the disclosure, the image processing device 100 may request a cloud server to transmit depth estimation models trained offline for each content class so as to obtain an interpolated depth estimation model, and when there is a request from the image processing device 100, the cloud server may transmit only some requested depth estimation models to the image processing device 100. In an embodiment of the disclosure, the image processing device 100 may previously receive the depth estimation models trained offline for each content class from the cloud server and store the depth estimation models in the image processing device 100 so as to obtain an interpolated depth estimation model, and may immediately use some necessary depth estimation models without making a separate request from the cloud server.

For example, the depth estimation models Model 1, Model 2, Model 3, and Model 4 trained offline may be stored in the cloud server or the image processing device 100. The depth estimation model, Model 1, may be a model previously trained using a training database of a movie or drama image-depth map pair, the depth estimation model, Model 2, may be a model previously trained using a training database of an FPS game image-depth map pair, the depth estimation model, Model 3, may be a model previously trained using a training database of a document-depth map pair, and the depth estimation model Model 4 may be a model previously trained using a training database of a complex content-depth map pair.

'Interpolation' between neural network models refers to a process of generating a model having intermediate performance between two or more models, by using linear interpolation, polynomial interpolation, or various interpolation methods. 'Interpolation' between neural network models is possible when a network structure and a training method between the models are the same. The expression that the network structure between neural network models is the same may mean that the number of layers constituting a neural network, the number of neurons in each layer, an activation function, etc. are the same. The expression that the training method between neural network models is the same may mean that a training algorithm, hyperparameters, and a preprocessing method of the training data are the same. Hereinafter, it is assumed that the depth estimation models (801, e.g., Model 1, Model 2, Model 3, and Model 4) for each content class have the same network structure and training method and are in a relationship that interpolation therebetween is possible.

The image processing device 100 may generate/obtain the depth estimation model Model Mz corresponding to the 2D input image 100 in real time, by adjusting weight values for interpolation between models according to a probability that the 2D input image 110 corresponds to each content class and interpolating parameters of the depth estimation models 801, based on the processed result 510 of analyzing the content class.

The image processing device 100 may adjust weight values for interpolation between models, based on the probability that the 2D input image 110 corresponds to each content class by using a policy-based algorithm. The policy-based algorithm for defining/adjusting weight values for interpolation between models may be predefined/set by a manufacturer of the image processing device 100.

For example, the image processing device 100 may generate/obtain the depth estimation model Mz corresponding to the 2D input image 110 by interpolating two models according to [Equation 2].

[Equation 2]

$$ \mathrm{Mz} = [\frac{W_a * P_{a1} + W_b * P_{b1}}{W_a + W_b}, \frac{W_a * P_{a2} + W_b * P_{b2}}{W_a + W_b}, ..., \frac{W_a * P_{an} + W_b * P_{bn}}{W_a + W_b}] $$

$W,$ and $W_b$ may denote weight values for interpolation. $Pa_1, P_{a2}, ,,, P_{an}$ may denote parameters of the depth estimation model Model A, and $P_{b1}, P_{b2}, ,,, P_{bn}$ may denote parameters of the depth estimation model Model B. The depth estimation models Model A and Model B each may refer to one of the depth estimation models 801 for each content class. $[\frac{W_a * P_{a1} + W_b * P_{b1}}{W_a + W_b}, \frac{W_a * P_{a2} + W_b * P_{b2}}{W_a + W_b}, ,,,, \frac{W_a * P_{an} + W_b * P_{bn}}{W_a + W_b}]$ may refer to parameters of the generated/obtained depth estimation model Mz corresponding to the 2D input image 110.

For example, the image processing device 100 may determine/predict a probability that the 2D input image 110 corresponds to 'drama' to be 20 % and a probability that the 2D input image 110 corresponds to 'FPS game' to be 80 %, based on the processed result 510 of analyzing the content class. The image processing device 100 may adjust the weight values $W_a$ and $W_b$ for interpolation, based on the probability that the 2D input image 110 corresponds to the 'drama' to be 20 % and the probability that the 2D input image 110 corresponds to the 'FPS game' to be 80 %, by using the policy-based algorithm. The image processing device 100 may obtain the depth estimation model Mz corresponding to the 2D input image 110 in real time, by substituting the depth estimation model Model 1 corresponding to the 'drama' and the depth estimation model Model 2 corresponding to the 'FPS Game' into the depth estimation models Model A and Model B, respectively, and interpolating the depth estimation models Model 1 and Model 2 according to [Equation 2].

The image processing device 100 according to an embodiment of the disclosure may obtain one or more corresponding depth estimation models in real time, with respect to each of scenes constituting the 2D input image 110, by using on-device learning.

The image processing device 100 according to an embodiment may obtain one or more corresponding depth estimation models in real time, with respect to each of scenes constituting the 2D input image 110, among depth estimation models for each content class, by adjusting weight values for interpolation between models according to the probability that each of the scenes constituting the 2D input image 110 corresponds to each content class and interpolating the parameters of the depth estimation models 801.

Accordingly, the image processing device 100 may dynamically apply depth estimation models for each of the scenes according to the content class of each of the scenes constituting the 2D input image 110, rather than applying a single depth estimation model to the 2D input image 110. In particular, when a 2D image including various scenes with different content classes is input, the image processing device 100 may reduce errors in depth estimation and improve the accuracy of depth estimation.

For example, when a scene transition 830 of the 2D input image 110 is detected, in 810, the image processing device 100 may process the result 510 of analyzing the content class by initializing cumulative content class analysis result data. The image processing device 100 may initialize the cumulative content class analysis result data whenever there is the scene transition 830 of the 2D input image 110. In 820, the image processing device 100 may determine/predict the probability that each of the scenes constituting the 2D input image 110 corresponds to each content class, based on the processed result 510 of analyzing the content class. The image processing device 100 may obtain one or more corresponding depth estimation models in real time, with respect to each of the scenes constituting the 2D input image 110, by adjusting weight values for interpolation between models according to the probability that each of the scenes constituting the 2D input image 110 corresponds to each content class and interpolating the parameters of the depth estimation models 801.

For example, it may be assumed that the 2D input image 110 is a complex image including the four scenes S1, S2, S3, and S4, and content classes of the scenes S1, S2, S3, and S4 are respectively drama, document, drama, and FPS game. The image processing device 100 may detect a scene transition S1->S2->S3->S4 of the 2D input image 110. The image processing device 100 may generate/obtain a depth estimation model Model $Mz_{s1}$ by adjusting weight values for interpolation between the depth estimation models Model 1, Model 2, Model 3, and Model 4 and interpolating the depth estimation models Model 1, Model 2, Model 3, and Model 4, based on the probability that the scene S1 corresponds to the 'drama', the probability that the scene S1 corresponds to the 'FPS game', the probability that the scene S1 corresponds to the 'complex content', and the probability that the scene S1 corresponds to the 'document'. Similarly, the image processing device 100 may generate/obtain in real time one or more depth estimation models Model $Mz_{s1}$, Model $Mz_{s2}$, Model $Mz_{s3}$, and Model $Mz_{s4}$ respectively corresponding to the scenes S1, S2, S3, and S4 constituting the 2D input image 110.

The image processing device 100 may use the obtained one depth estimation model corresponding to the 2D input image 110 or the one or more depth estimation models corresponding to the scenes constituting the 2D input image 100 to obtain the depth map 10 (e.g., the first depth map) of the 2D input image 110.

For example, the image processing device 100 may obtain the depth map 10 (e.g., the first depth map) of the 2D input image 110 by using the obtained depth estimation model Model Mz corresponding to the 2D input image 110.

For example, the image processing device 100 may obtain the depth map 10 (e.g., the first depth map) of the 2D input image 110, by obtaining a depth map of the scene S1 by using the obtained depth estimation model Model $Mz_{s1}$ corresponding to the scene S1, obtaining a depth map of the scene S2 by using the obtained depth estimation model Model $Mz_{s2}$ corresponding to the scene S2, obtaining a depth map of the scene S3 by using the obtained depth estimation model Model $Mz_{s3}$ corresponding to the scene S3, and obtaining a depth map of the scene S4 by using the obtained depth estimation model Model $Mz_{s4}$ corresponding to the scene S4.

FIG. 8 shows that the image processing device 100 interpolates two depth estimation models, but this is only an example, and the image processing device 100 may interpolate two or more depth estimation models in a similar manner.

FIG. 8 shows only four depth estimation models for each content class, but this is only an example, and fewer or more depth estimation models than 4 for each content class may be stored in the image processing device 100. In addition, it is described with reference to FIG. 8 that the 2D input image 110 includes four scenes, but this is only an example, and the 2D input image 110 may include numerous scenes or one scene.

The image processing device 100 according to an embodiment of the disclosure may provide a method of dynamically applying a depth estimation model in real time, by using on-device AI technology, according to the content class of the input 2D image or a content class for each of scenes of the input 2D image, and thus, depth estimation errors may be reduced, thereby improving the accuracy of depth estimation, and improving the satisfaction and convenience of a user using a 3D display.

However, the effects that may be obtained from the disclosure are not limited to the effects mentioned above, and other effects not mentioned will be clearly understood by one of ordinary skill in the art from the description below.

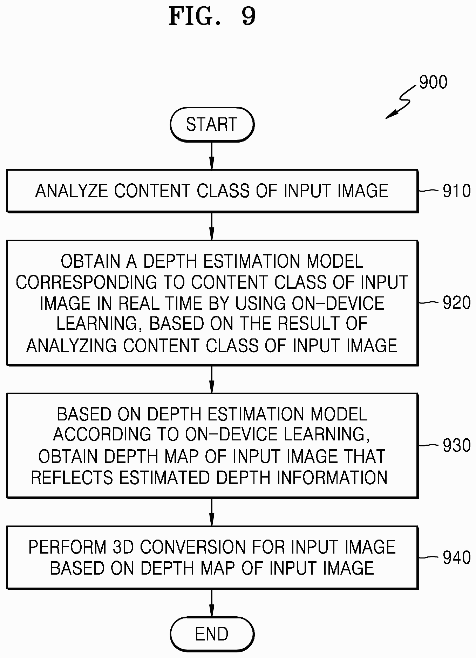

FIG. 9 is a flowchart for describing a method, performed by the image processing device 100, of performing 3D conversion for the 2D input image 10 according to an embodiment of the disclosure.

Referring to FIG. 9, in operation 910, the image processing device 100 according to an embodiment of the disclosure may analyze a content class of the 2D input image 110. For example, the input image 110 may be a 2D image. For example, the content class may include movie, drama, FPS game, RPG, RTS game, MMORPG, document, complex content, presentation material, etc., but are not limited thereto.

The image processing device 100 according to an embodiment of the disclosure may analyze the content class of the 2D input image 110 by using the content class analysis model 500. The content class analysis model 500 may refer to an artificial neural network model trained to predict the content class of the 2D input image 110.

The image processing device 100 according to an embodiment may analyze the content class of the 2D input image 110 by using a policy-based algorithm. The policy-based algorithm for analyzing the content class of the 2D input image 110 may be predefined/set by a manufacturer of the image processing device 100.

According to an embodiment of the disclosure, the image processing device 100 may analyze the content class of the 2D input image 110 by mixing the content class analysis model 500 and the policy-based algorithm.

According to an embodiment of the disclosure, the result 510 of analyzing the content class may include information related to a probability that the 2D input image 110 corresponds to each of predefined content classes. For example, the result 510 of analyzing the content class may include information indicating a specific content class with the highest probability that the 2D input image 110 corresponds to among the predefined content classes. For example, the result 510 of analyzing the content class may include probability values indicating the probability that the 2D input image 110 corresponds to each of predefined content classes.

In operation 920, the image processing device 100 according to an embodiment of the disclosure may obtain a depth estimation model corresponding to the content class of the 2D input image 110 in real time, based on the result 510 of analyzing the content class of the 2D input image 110.

The depth estimation model may refer to an artificial neural network model trained/trained to predict depth information of each of pixels constituting the 2D input image 110.

The image processing device 100 according to an embodiment of the disclosure may obtain a depth estimation model corresponding to the content class of the 2D input image 110 in real time through the cloud server 600, based on the result 510 of analyzing the content class of the 2D input image 110.

The image processing device 100 according to an embodiment of the disclosure may obtain a depth estimation model corresponding to the content class of the 2D input image 110 in real time by using on-device learning, based on the result 510 of analyzing the content class of the 2D input image 110.

The image processing device 100 according to an embodiment of the disclosure may obtain the depth estimation model corresponding to the 2D input image 110 in real time, by updating parameters of depth estimation models mounted on the image processing device 100 or a server and training depth estimation model (720), based on the result 510 of analyzing the content class of the 2D input image 110.

The image processing device 100 according to an embodiment of the disclosure may obtain the depth estimation model corresponding to the 2D input image 110 in real time, by interpolating 820 depth estimation models mounted on the image processing device 100 or the server based on the result 510 of analyzing the content class of the 2D input image 110.

The image processing device 100 according to an embodiment of the disclosure may obtain depth estimation models respectively corresponding to scenes constituting the 2D input image 110 in real time, based on the result 510 of analyzing the content class of the 2D input image 110.

In operation 930, the image processing device 100 according to an embodiment of the disclosure may obtain the depth map 10 (e.g., the first depth map) of the 2D input image 110, based on the depth estimation model according to on-device learning. The depth map 10 reflects depth information estimated by the depth estimation model. The image processing device 100 may input the 2D input image 110 as input data to the depth estimation model obtained in operation 920, and output a depth map of the 2D input image 110 as output data. The depth map may refer to a 2D image in which depth information of each of pixels constituting an image is expressed as a value such as brightness or color of each pixel.

The image processing device 100 according to an embodiment of the disclosure may obtain the depth map 10 (e.g., the first depth map) of the 2D input image 110 in real time, by applying depth estimation models respectively corresponding to the scenes constituting the 2D input image 110 for each of the scenes constituting the 2D input image 110.

A depth map of the 2D input image 110 initially obtained by the image processing device 100, that is, a depth map before non-linearly changing the depth map, may be referred to as a 'depth map' or a 'first depth map'.

In operation 940, the image processing device 100 according to an embodiment of the disclosure may perform 3D conversion for the 2D input image 110 based on the depth map 10 (e.g., the first depth map) of the 2D input image 110.

The image processing device 100 according to an embodiment of the disclosure may perform 3D conversion for the 2D input image 110, by performing a process 370 of generating a new viewpoint view, a hole filling process 380, and a pixel mapping process 390, based on the depth map 10 (e.g., the first depth map) of the 2D input image 110.

In an embodiment of the disclosure, the image processing device 100 may obtain the 3D output image 120 which is converted from the 2D input image 110. The image processing device 100 may control a display to output the 3D output image 120.

In an embodiment of the disclosure, the image processing device 100 may control the display to generate and output a UI that indicates a content class corresponding to each of scenes constituting the 3D output image 120 converted from the 2D input image 110 and a stereoscopic effect of each of the scenes. A user may figure out the content class of each of scenes of the 3D output image 120 being viewed and a degree of stereoscopic effect of each of scenes, through the UI provided by the image processing device 100.

According to an embodiment of the disclosure, the image processing device 100 may dynamically apply a depth estimation model in real time, based on analysis of a content class of an input 2D image, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

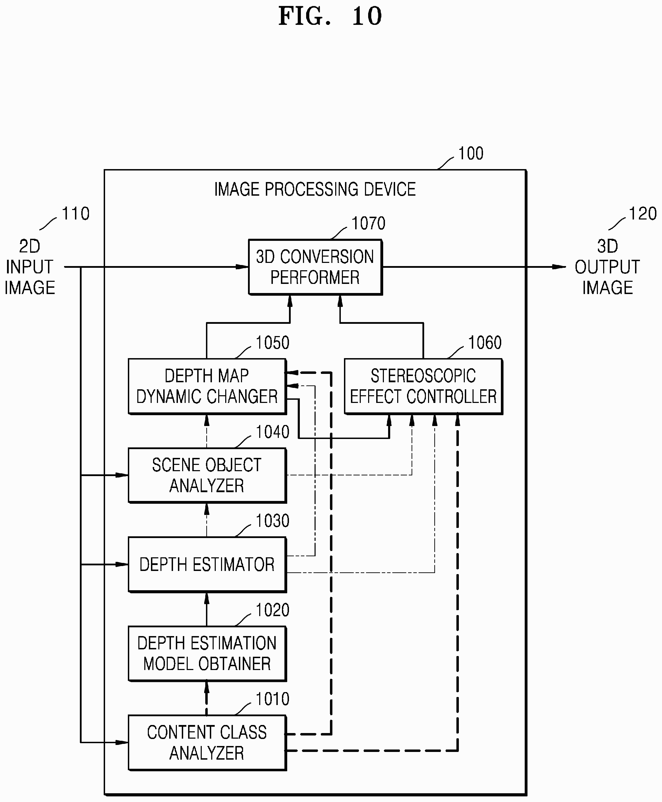

FIG. 10 is an internal block diagram of the image processing device 100 according to an embodiment of the disclosure.

Referring to FIG. 10, the image processing device 100 according to an embodiment of the disclosure may include a content class analyzer 1010, a depth estimation model obtainer 1020, a depth estimator 1030, a scene object analyzer 1040, a depth map dynamic changer 1050, a stereoscopic effect controller 1060, and a 3D conversion performer 1070.

The content class analyzer 1010, the depth estimation model obtainer 1020, the depth estimator 1030, the scene object analyzer 1040, the depth map dynamic changer 1050, the stereoscopic effect controller 1060, and the 3D conversion performer 1070 may be implemented through at least one processor. The content class analyzer 1010, the depth estimation model obtainer 1020, the depth estimator 1030, the scene object analyzer 1040, the depth map dynamic changer 1050, the stereoscopic effect controller 1060, and the 3D conversion performer 1070 may operate according to at least one instruction stored in a memory (e.g., 102 of FIG. 17).

FIG. 10 individually shows the content class analyzer 1010, the depth estimation model obtainer 1020, the depth estimator 1030, the scene object analyzer 1040, the depth map dynamic changer 1050, the stereoscopic effect controller 1060, and the 3D conversion performer 1070, but the content class analyzer 1010, the depth estimation model obtainer 1020, the depth estimator 1030, the scene object analyzer 1040, the depth map dynamic changer 1050, the stereoscopic effect controller 1060, and the 3D conversion performer 1070 may be implemented through a single processor. In this case, the content class analyzer 1010, the depth estimation model obtainer 1020, the depth estimator 1030, the scene object analyzer 1040, the depth map dynamic changer 1050, the stereoscopic effect controller 1060, and the 3D conversion performer 1070 may be implemented through a dedicated processor, or may be implemented through a combination of a general-purpose processor such as an AP, a CPU, or a GPU and software. In addition, the dedicated processor may include a memory implementing an embodiment of the disclosure or a memory processing unit using an external memory. In addition, an AI dedicated processor such as an NPU may be designed with a hardware structure specialized in the processing of a specific AI model.

The content class analyzer 1010, the depth estimation model obtainer 1020, the depth estimator 1030, the scene object analyzer 1040, the depth map dynamic changer 1050, the stereoscopic effect controller 1060, and the 3D conversion performer 1070 may be configured through a plurality of processors. In this case, the content class analyzer 1010, the depth estimation model obtainer 1020, the depth estimator 1030, the scene object analyzer 1040, the depth map dynamic changer 1050, the stereoscopic effect controller 1060, and the 3D conversion performer 1070 may be implemented through a combination of dedicated processors, or may be implemented through a combination of a plurality of general-purpose processors such as APs, CPUs, or GPUs and software.

In an embodiment of the disclosure, the content class analyzer 1010, the depth estimation model obtainer 1020, and the depth estimator 1030 may operate similarly to the content class analyzer 410, the depth estimation model obtainer 420, and the depth estimator 430 of FIG. 4, respectively. The descriptions redundant with those given with reference to FIG. 4 are omitted here.

In an embodiment of the disclosure, the scene object analyzer 1040 may receive the depth map 10 (e.g., first depth map) of the 2D input image 110 from the depth estimator 1030.

In an embodiment of the disclosure, the scene object analyzer 1040 may analyze sizes and distributions of objects included in each of scenes constituting the 2D input image 110, with respect to each of the scenes. In an embodiment of the disclosure, the scene object analyzer 1040 may analyze the sizes and distributions of objects included in each of scenes constituting the 2D input image 110, with respect to each of the scenes, based on the 2D input image 110 and the depth map 10 (e.g., first depth map) of the 2D input image 110.

In an embodiment of the disclosure, the scene object analyzer 1040 may include appropriate logic, circuit, interface, and/or code that may operate to analyze the sizes and distributions of objects included in each of the scenes constituting the 2D input image 110.

The 'object', which is an independently identifiable subject or object within each of the scenes constituting the 2D input image 110, may refer to an element with visually distinct characteristics. For example, the object may refer to a specific object, animal, or person included in each of the scenes constituting the 2D input image 110.

In an embodiment of the disclosure, the scene object analyzer 1040 may analyze the sizes and distributions of objects included in each of the scenes constituting the 2D input image 110 by using at least one of an artificial neural network (e.g., a scene object analysis model 1100 of FIG. 11) trained to analyze the sizes and distributions of objects included in each of the scenes constituting the 2D input image 110 or a policy-based algorithm.

In an embodiment of the disclosure, the scene object analyzer 1040 may obtain information related to size characteristics for each of objects included in each of the scenes and distribution characteristics for each of objects included in each of the scenes, as a result of analyzing the sizes and distributions of objects included in each of the scenes.

In an embodiment of the disclosure, the scene object analyzer 1040 may transmit the result of analyzing the sizes and distributions of objects included in each of the scenes constituting the 2D input image 110 to the depth map dynamic changer 1050 and the stereoscopic effect controller 1060.

In an embodiment of the disclosure, the depth map dynamic changer 1050 may receive the result of analyzing the sizes and distributions of objects included in each of the scenes constituting the 2D input image 110 from the scene object analyzer 1040. The depth map dynamic changer 1050 may receive the result 510 of analyzing a content class of the 2D input image 110 from the content class analyzer 1010. The depth map dynamic changer 1050 may receive the depth map 10 (e.g., the first depth map) of the 2D input image 110 from the depth estimator 1030.

In an embodiment of the disclosure, the depth map dynamic changer 1050 may obtain additional information including at least one of metadata information about the 2D input image 110, information about a viewing environment, or user setting information related to the 2D input image 110.

In an embodiment of the disclosure, the depth map dynamic changer 1050 may obtain the modified depth map 20 (e.g., the second depth map) by non-linearly changing the depth map 10 (e.g., the first depth map), based on at least one of the result of analyzing the sizes and distributions of objects included in each of the scenes, the result 510 of analyzing a content class of the 2D input image 110, or the obtained additional information.

In an embodiment of the disclosure, the depth map dynamic changer 1050 may include appropriate logic, circuit, interface, and/or code that may operate to obtain the modified depth map 20 (e.g., the second depth map) by non-linearly changing the depth map 10 (e.g., the first depth map).

In an embodiment of the disclosure, the depth map dynamic changer 1050 may obtain the modified depth map 20 (e.g., the second depth map) by non-linearly changing the depth map 10 (e.g., the first depth map), by using at least one of an artificial neural network (e.g., a depth map dynamic changing model 1200 of FIG. 12A) trained to non-linearly change input depth maps constituting the 2D input image 110, a policy-based algorithm, or a lookup table (LUT) method.

In an embodiment of the disclosure, the depth map dynamic changer 1050 may transmit the modified depth map 20 (e.g., the second depth map) to the 3D conversion performer 1070. The depth map dynamic changer 1050 may transmit the modified depth map 20 (e.g., the second depth map) to the stereoscopic effect controller 1060.

In an embodiment of the disclosure, the stereoscopic effect controller 1060 may receive the result of analyzing the sizes and distributions of objects included in each of the scenes constituting the 2D input image 110 from the scene object analyzer 1040. The stereoscopic effect controller 1060 may receive the result 510 of analyzing the content class of the 2D input image 110 from the content class analyzer 1010. The stereoscopic effect controller 1060 may receive the depth map 10 (e.g., the first depth map) of the 2D input image 110 from the depth estimator 1030. The stereoscopic effect controller 1060 may receive the modified depth map 20 (e.g., the second depth map) of the 2D input image 110 from the depth map dynamic changer 1050.

In an embodiment of the disclosure, the stereoscopic effect controller 1060 may obtain the additional information including at least one of the metadata information about the 2D input image 110, the information about the viewing environment, or the user setting information related to the 2D input image 110.

In an embodiment of the disclosure, the stereoscopic effect controller 1060 may determine relative positions of objects included in each of the scenes constituting the 2D input image 110 from a virtual convergence plane corresponding to a screen, based on at least one of the result of analyzing the sizes and distributions of objects included in each of the scenes, the result 510 of analyzing the content class of the 2D input image 110, or the obtained additional information.

In an embodiment of the disclosure, the stereoscopic effect controller 1060 may include appropriate logic, circuit, interface, and/or code that may operate to determine relative positions of objects included in each of the scenes constituting the 2D input image 110 from the virtual convergence plane corresponding to the screen.

In an embodiment of the disclosure, the stereoscopic effect controller 1060 may determine relative positions of objects included in each of the scenes constituting the 2D input image 110 from the virtual convergence plane corresponding to the screen, by using at least one of an artificial neural network (e.g., a stereoscopic effect control model 1300 of FIG. 14) trained/trained to determine relative positions of objects included in each of the scenes constituting the 2D input image 110 from the virtual convergence plane corresponding to the screen, the policy-based algorithm, or an LUT method.

In an embodiment of the disclosure, the stereoscopic effect controller 1060 may transmit information about relative positions of objects included in each of the scenes with respect to the convergence plane to the 3D conversion performer 1070.

In an embodiment of the disclosure, the 3D conversion performer 1070 may receive the modified depth map 20 (e.g., the second depth map) from the depth map dynamic changer 1050. In an embodiment of the disclosure, the 3D conversion performer 1070 may receive the information about relative positions of objects included in each of the scenes with respect to the convergence plane from the stereoscopic effect controller 1060.

In an embodiment of the disclosure, the 3D conversion performer 1070 may obtain the 3D output image 120 by performing 3D conversion for the 2D input image 110 based on the modified depth map 20 (e.g., second depth map). In an embodiment of the disclosure, the 3D conversion performer 1070 may operate similarly to the 3D conversion performer 440 of FIG. 4. The descriptions redundant with those given with reference to FIG. 4 are omitted here.

In an embodiment of the disclosure, the 3D conversion performer 1070 may perform 3D conversion for the 2D input image 110, based on the modified depth map 20 (e.g., second depth map) of the 2D input image 110 and the information about relative positions of objects included in each of the scenes with respect to the convergence plane. The 3D conversion performer 1070 may perform 3D conversion for the 2D input image 110 by performing a process of generating a new viewpoint view based on the information about relative positions of objects included in each of the scenes with respect to the convergence plane.

According to an embodiment of the disclosure, the image processing device 100 may non-linearly change a depth map and control a stereoscopic effect, based on analysis of a content class of an input 2D image and analysis of objects included in each of scenes, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

FIG. 11 is a diagram for describing a process, performed by the image processing device 100, of analyzing a scene object of the 2D input image 110 according to an embodiment of the disclosure.

Referring to FIG. 11, the image processing device 100 (e.g., scene object analyzer 1040 of the image processing device 100) an embodiment of the disclosure may analyze sizes and distributions of objects included in each of scenes constituting the 2D input image 110, with respect to each of the scenes.

The image processing device 100 may analyze the sizes and distributions of objects included in each of scenes constituting the 2D input image 110, with respect to each of the scenes, based on the 2D input image 110 and the depth map 10 (e.g., first depth map) of the 2D input image 110. The image processing device 100 may analyze the sizes and distributions of objects included in each of scenes constituting the 2D input image 110 and obtain a result 1110 of analyzing the sizes and distributions of objects included in each of scenes, with respect to each of the scenes. The 'result 1110 of analyzing the sizes and distributions of objects included in each of scenes' may be mentioned as 'information related to size characteristics for each of objects included in each of the scenes and distribution characteristics for each of objects included in each of the scenes'.

The image processing device 100 may analyze the sizes of objects included in each of scenes constituting the 2D input image 110, by calculating an area of pixels occupied by each of objects included in each of the scenes and measuring the sizes of objects, and comparing relative sizes of objects included in one scene.

The image processing device 100 may analyze the distribution of each of objects included in each of the scenes constituting the 2D input image 110 in space, based on the depth map 10 (e.g., first depth map) of the 2D input image 110.

For example, in 1120, it may be assumed that the 2D input image 110 includes scenes A to F. The image processing device 100 may analyze whether the sizes of objects included in scenes A to F are large or small, and whether the distributions of the objects are close views or distant views, based on the 2D input image 110 and the depth map 10 (e.g., first depth map). However, 1120 is only an example, and the image processing device 100 may obtain the result 1110 of analyzing the sizes and distributions of objects included in each of scenes constituting the 2D input image 110, through numerical expressions that may indicate the sizes and distributions of objects included in each of the scenes, etc.

According to an embodiment of the disclosure, the image processing device 100 may analyze the sizes and distributions of objects included in each of the scenes constituting the 2D input image 110, with respect to each of the scenes by using the scene object analysis model 1100.

The scene object analysis model 1100 may refer to an artificial neural network model trained to analyze the sizes and distributions of objects included in each of the scenes constituting the 2D input image 110. For example, the scene object analysis model 1100 may refer to the artificial neural network model trained/trained to analyze the sizes and distributions of objects included in each of the scenes constituting the 2D input image 110 by using technology such as CNN, DNN, RNN, RBM, DBN, BRDNN or deep Q-network, HOG, SHIFT, LSTM, SVM, SoftMax, etc., but is not limited thereto.

The scene object analysis model 1100 may receive the 2D input image 110 and the depth map 10 (e.g., the first depth map) of the 2D input image 110 as input data, and output the result 1110 of analyzing the sizes and distributions of objects included in each of the scenes as output data. The image processing device 100 may obtain the scene object analysis model 1100 trained from a cloud server. The image processing device 100 may train /generate/obtain the scene object analysis model 1100 by using on-device learning.

According to an embodiment of the disclosure, the image processing device 100 may analyze the sizes and distributions of objects included in each of the scenes constituting the 2D input image 110, with respect to each of the scenes, by using a policy-based algorithm. The policy-based algorithm for analyzing the sizes and distributions of objects included in each of the scenes constituting the 2D input image 110 may be predefined/set by a manufacturer of the image processing device 100.

According to an embodiment of the disclosure, the image processing device 100 may analyze the sizes and distributions of objects included in each of the scenes constituting the 2D input image 110, with respect to each of the scenes, by mixing the scene object analysis model 1100 and the policy-based algorithm.

According to an embodiment of the disclosure, the image processing device 100 may non-linearly change a depth map and control a stereoscopic effect, based on the analysis of sizes and distributions of objects included in each of scenes constituting an input 2D image, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

FIGS. 12A to 12C are diagrams for describing a process, performed by the image processing device 100, of dynamically changing a depth map according to an embodiment of the disclosure.

Referring to FIG. 12A, the image processing device 100 (e.g., the depth map dynamic changer 1050 of the image processing device 100) according to an embodiment of the disclosure may obtain the modified depth map 20 (e.g., the second depth map) by non-linearly changing the depth map 10 (e.g., the first depth map).

The image processing device 100 may obtain the modified depth map 20 (e.g., the second depth map) by non-linearly changing the depth map 10 (e.g., the first depth map), based on at least one of the depth map 10 (e.g., the first depth map) of the 2D input image 110, the result 1110 of analyzing sizes and distributions of objects included in each of scenes constituting the 2D input image 110, the result 510 of analyzing a content class of the 2D input image 110, or additional information 1201.

In an embodiment of the disclosure, the image processing device 100 may obtain the additional information 1201.

The additional information 1201 may include at least one of metadata information related to the 2D input image 110, information about a viewing environment, or user setting information.

The metadata information related to the 2D input image 110 may refer to information indicating various details related to the 2D input image 110. For example, the metadata information related to the 2D input image 110 may include information about a title, description, content class, and topic of the 2D input image 110, information about a date and time that the 2D input image 110 was generated, information about a location where the 2D input image 110 was photographed, information about a creator, editor, copyright owner, and usage rights of the 2D input image 110, information about a resolution, bitrate, and codec of the 2D input image 110, information about a color gamut and file format of the 2D input image 110, information about the total number of frames or the number of scenes constituting the 2D input image 110, and characters who appear in the 2D input image 110, etc.

The information about the viewing environment may refer to information about a surrounding environment of a user viewing the 3D output image 120. For example, the information about the viewing environment may include luminance of the surrounding environment of the user measured by a sensor in the image processing device 100, etc. or screen brightness of a display on which the 3D image 120 is displayed.

The user setting information may refer to information reflecting a degree of a stereoscopic effect that the user wants to view the 2D input image 110, that is, a user's preference related to the stereoscopic effect of the 2D input image 110. For example, the user setting information related to the 2D input image 110 may include information about the intensity of the 3D effect manually adjusted by the user through the UI 250A and UI 250B of FIG. 2C.

In an embodiment of the disclosure, the image processing device 100 may obtain the additional information 1201 from another device existing outside the image processing device 100, or obtain the additional information 1201 through a process inside the image processing device 100.

In an embodiment of the disclosure, the image processing device 100 may obtain the modified depth map 20 (e.g., the second depth map) by non-linearly changing the depth map 10 (e.g., the first depth map), according to 1210A to 1230A.

In 1210A, the image processing device 100 according to an embodiment of the disclosure may generate an offset for each of objects included in each of scenes constituting the 2D input image 110, based on the result 1110 of analyzing sizes and distributions of objects included in each of the scenes. The offset may refer to a deviation with respect to depth information of pixels constituting each of objects included in the depth map10 (e.g., the first depth map), and may include a positive deviation or a negative deviation.

In 1220A, the image processing device 100 according to an embodiment of the disclosure may non-linearly change the depth map 10 (e.g., the first depth map), by adjusting depth information included in the depth map 10 (e.g., the first depth map) of the 2D input image 110 by the offset generated for each of objects included in each of the scenes.

In 1230A, the image processing device 100 according to an embodiment of the disclosure may control an output range of the depth map, based on at least one of the result 510 of analyzing a content class of the 2D input image 110 or the obtained additional information 1201. The output range of the depth map may refer to a range from the minimum to the maximum of the depth information of pixels included in the depth map. In an embodiment of the disclosure, the image processing device 100 may control the output range of the depth map, by preferentially considering information included in the additional information 1201 rather than the result 510 of analyzing the content class of the 2D input image 110.

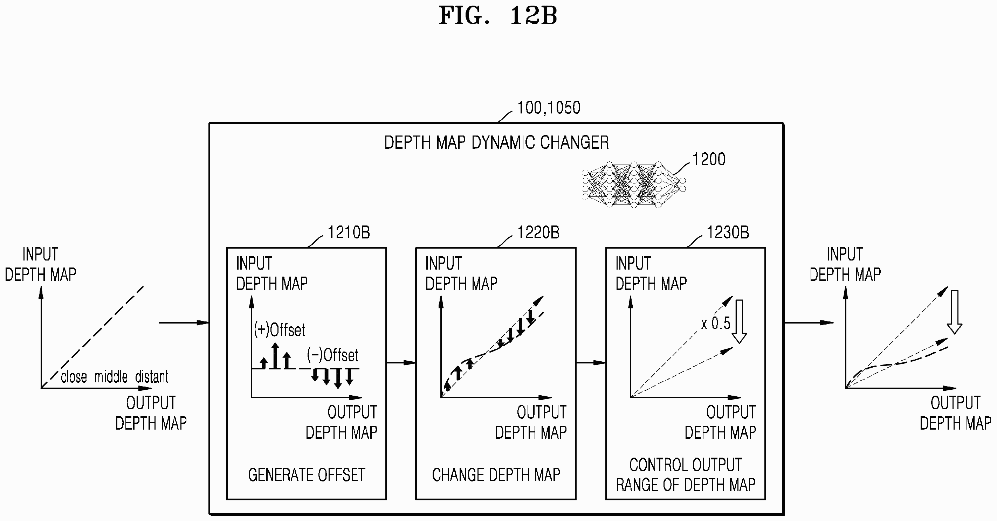

For example, referring to FIG. 12B, an input depth map may be the depth map 10 (e.g., the first depth map), and an output depth map may be the modified depth map 20 (e.g., the second depth map). The image processing device 100 may obtained the output depth map by non-linearly changing the input depth map through 1210B to 1230B.

For example, in 1210B, the image processing device 100 may generate a positive offset with respect to some objects included in a specific scene constituting the 2D input image 110 and generate a negative offset with respect to the other objects, based on the result 1110 of analyzing the sizes and distributions of objects included in each of the scenes constituting the 2D input image 110.

For example, in 1220B, the image processing device 100 may adjust depth information of pixels constituting the corresponding objects included in the input depth map by the offset generated in 1210B. Adjusting the depth information by the positive offset may mean adjusting an object to further pop up, and adjusting the depth information by the negative offset may mean adjusting the object to appear further behind.

For example, in 1230B, the image processing device 100 may obtain information about a viewing environment indicating that a surrounding environment of a user is dark indoors with a luminance close to 0 lux, as the additional information 1201. In this case, the image processing device 100 may control the overall output range of the depth map reflecting the depth information adjusted in 1220B to be 0.5 times in order to reduce a user's fatigue.

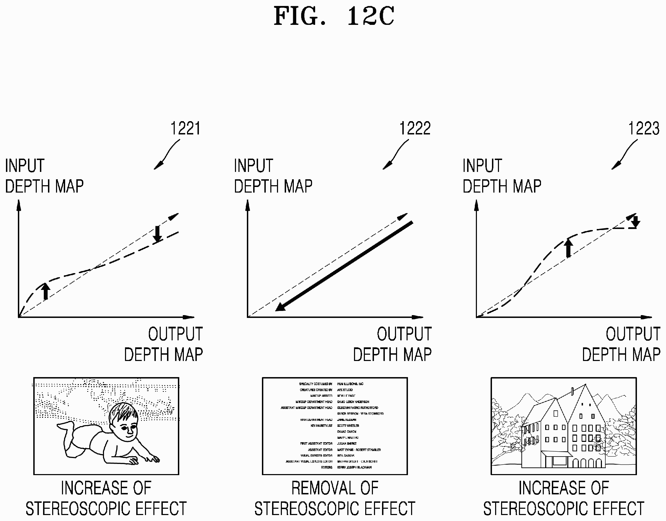

For example, referring to FIG. 12C, in 1221, the image processing device 100 may non-linearly change the input depth map, by applying the positive deviation to depth information of pixels constituting a human object and the negative deviation to depth information of pixels constituting a background object. In 1222, the image processing device 100 may determine that a content class is text based on the result 510 of analyzing the content class or the additional information 1201, and control the overall output range of the depth map to be 0. In 1223, the image processing device 100 may non-linearly change the input depth map, by applying the positive deviation to depth information of pixels constituting a building object and the negative deviation to the depth information of pixels constituting the background object.

Referring back to FIG. 12A, according to an embodiment of the disclosure, the image processing device 100 may obtain the modified depth map 20 (e.g., the second depth map) by non-linearly changing the depth map 10 (e.g., the first depth map) by using the depth map dynamic change model 1200.

The depth map dynamic change model 1200 may refer to an artificial neural network model trained to non-linearly change the depth map 10 (e.g., the first depth map). For example, the depth map dynamic change model 1200 may refer to the artificial neural network model trained to non-linearly change the depth map 10 (e.g., first depth map) by using technology such as CNN, DNN, RNN, RBM, DBN, BRDNN or deep Q-network, HOG, SHIFT, LSTM, SVM, SoftMax, etc., but is not limited thereto.

The depth map dynamic change model 1200 may receive the depth map 10 (e.g., the first depth map) of the 2D input image 110 as input data and output the modified depth map 20 (e.g., the second depth map) of the 2D input image 110 as output data. The image processing device 100 may obtain the depth map dynamic change model 1200 trained from a cloud server. The image processing device 100 may train/generate/obtain the depth map dynamic change model 1200 by using on-device learning.

According to an embodiment of the disclosure, the image processing device 100 may obtain the modified depth map 20 (e.g., the second depth map) by non-linearly changing the depth map 10 (e.g., the first depth map) by using a policy-based algorithm. The policy-based algorithm for non-linearly changing the depth map 10 (e.g., the first depth map) may be predefined/set by a manufacturer of the image processing device 100.

According to an embodiment of the disclosure, the image processing device 100 may obtain the modified depth map 20 (e.g., the second depth map) by non-linearly changing the depth map 10 (e.g., the first depth map) by using an LUT method. A specific function or a mapping table for the LUT method may be predefined/set by the manufacturer of the image processing device 100. For example, the image processing device 100 may use a mapping table that collectively adjusts depth information of pixels corresponding to a specific range by a predefined offset in the depth map 10 (e.g., the first depth map). For example, in the case of a scene having a specific object distribution, the image processing device 100 may use a mapping table that collectively adjusts depth information of pixels constituting objects of the scene by a predefined offset.

According to an embodiment of the disclosure, the image processing device 100 may obtain the modified depth map 20 (e.g., the second depth map) by non-linearly changing the depth map 10 (e.g., the first depth map) by mixing two or more of the depth map dynamic change model 1200, the policy-based algorithm, and the LUT method.

According to an embodiment of the disclosure, the image processing device 100 may non-linearly change a depth map, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

FIGS. 13 and 14 are diagrams for describing a process, performed by the image processing device 100, of controlling a stereoscopic effect according to an embodiment of the disclosure.

An operation of controlling 'depth', which is one of main factors affecting the stereoscopic effect, has been described with reference to FIGS. 12A to 12C. An operation of adjusting a 'degree of pop-up (negative disparity) and behind-screen (positive disparity) compared to a screen', which is another one of the main factors affecting the stereoscopic effect, is described with reference to FIGS. 13 to 14. Pop-up (or, Pop-out, negative disparity) may mean that an object pops up over the screen, and behind-screen (positive disparity) may mean that an object is behind the screen. In-focus (zero disparity) may mean that an object is on a virtual convergence plane corresponding to the screen.

Referring to FIG. 13, the image processing device 100 (e.g., the stereoscopic effect controller 1060 of the image processing device 100) according to an embodiment of the disclosure may determine relative positions of objects included in each of scenes constituting the 2D input image 110 from a virtual convergence plane corresponding to the screen.

The image processing device 100 may determine a position of the virtual convergence plane corresponding to the screen, based on at least one of the result 1110 of analyzing the sizes and distributions of objects included in each of scenes, the result 510 of analyzing the content class of the 2D input image 110 or the obtained additional information 1201 or at least one of the depth map 10 or the modified depth map 20 of the 2D input image 110. When the position of the virtual convergence plane corresponding to the screen is determined, the image processing device 100 may determine relative positions of objects included in each of the scenes constituting the 2D input image 110 from the convergence plane. The relative positions of objects included in each of the scenes from the convergence plane may be determined as one of pop-up, in-focus, or behind-screen.

For example, when the size of an object is large, the distribution of the object is a close view, and close views or distant views are clearly distinguished, the image processing device 100 may determine a relative position of the object from the convergence plane as pop-up, according to the result 1110 of analyzing the sizes and distributions of objects included in each of scenes. For example, when the size of an object is small, and the distribution of the object is a distant view, the image processing device 100 may determine a relative position of the object from the convergence plane as behind-screen, according to the result 1110 of analyzing the sizes and distributions of objects included in each of scenes. For example, when the content class of the 2D input image 110 is document, the image processing device 100 may determine relative positions of objects included in the 2D input image 110 from the convergence plane, according to the result 510 of analyzing the content class of the 2D input image 110 or the obtained additional information 1201.

For example, referring to FIG. 14, 1410 to 1460 show an example of determining relative positions of objects included in each of scenes constituting the 2D input image 110 from the virtual convergence plane corresponding to the screen, based on at least one of the result 1110 of analyzing the sizes and distributions of objects included in each of scenes, the result 510 of analyzing the content class of the 2D input image 110 or the obtained additional information 1201 or at least one of the depth map 10 or the modified depth map 20 of the 2D input image 110.

Referring back to FIG. 13, according to an embodiment of the disclosure, the image processing device 100 may determine relative positions of objects included in each of scenes constituting the 2D input image 110 from the virtual convergence plane corresponding to the screen by using a stereoscopic effect control model 1300.

The stereoscopic effect control model 1300 may refer to an artificial neural network model trained to determine relative positions of objects included in each of scenes constituting the 2D input image 110 from the virtual convergence plane corresponding to the screen. For example, the stereoscopic effect control model 1300 may refer to the artificial neural network model trained/trained to determine relative positions of objects included in each of scenes constituting the 2D input image 110 from the virtual convergence plane corresponding to the screen, by using technology such as CNN, DNN, RNN, RBM, DBN, BRDNN or deep Q-network, HOG, SHIFT, LSTM, SVM, SoftMax, etc., but is not limited thereto.

The stereoscopic effect control model 1300 may receive, as input data, at least one of the result 1110 of analyzing the sizes and distributions of objects included in each of scenes, the result 510 of analyzing the content class of the 2D input image 110 or the obtained additional information 1201 or at least one of the depth map 10 or the modified depth map 20 of the 2D input image 110, and output, as output data, information about relative positions of objects included in each of the scenes with respect to the convergence plane. The image processing device 100 may obtain the stereoscopic effect control model 1300 trained from a cloud server. The image processing device 100 may train/generate/obtain the stereoscopic effect control model 1300 by using on-device learning.

According to an embodiment of the disclosure, the image processing device 100 may determine relative positions of objects included in each of the scenes constituting the 2D input image 110 from the virtual convergence plane corresponding to the screen by using a policy-based algorithm. The policy-based algorithm for determining relative positions of objects included in each of the scenes constituting the 2D input image 110 from the virtual convergence plane corresponding to the screen may be predefined/set by a manufacturer of the image processing device 100.

According to an embodiment of the disclosure, the image processing device 100 may determine relative positions of objects included in each of the scenes constituting the 2D input image 110 from the virtual convergence plane corresponding to the screen by using an LUT method. A specific function or a mapping table for the LUT method may be predefined/set by the manufacturer of the image processing device 100. For example, in the case of a scene with a specific content class, the image processing device 100 may use a mapping table that determines relative positions of objects included in the scene from the virtual convergence plane as predefined positions.

According to an embodiment of the disclosure, the image processing device 100 may determine relative positions of objects included in each of the scenes constituting the 2D input image 110 from the virtual convergence plane corresponding to the screen by mixing two or more of the stereoscopic effect control model 1300, the policy-based algorithm, and the LUT method.

According to an embodiment of the disclosure, the image processing device 100 may determine whether to make objects included in each of scenes constituting a 2D input image to pop-up over the screen or to be behind the screen, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

FIG. 15 is a flowchart for describing a method 1500, performed by the image processing device 100, of performing 3D conversion for the 2D input image 110 according to an embodiment of the disclosure.

Referring to FIG. 15, in operation 1510, the image processing device 100 according to an embodiment of the disclosure may analyze a content class of the input image 110. Operation 1510 may operate similarly to operation 910 of FIG. 9. The descriptions redundant with those given with reference to FIG. 9 are omitted here.

In operation 1520, the image processing device 100 according to an embodiment of the disclosure may obtain a depth estimation model corresponding to the input image 110 in real time, based on the result 510 of analyzing the content class of the input image 110.

The image processing device 100 may obtain a depth estimation model corresponding to the input image 110 in real time through a cloud server, based on the result 510 of analyzing the content class of the input image 110. The image processing device 100 may train/generate/obtain one or more depth estimation models corresponding to the input image 110 in real time, by using on-device learning, based on the result 510 of analyzing the content class of the input image 110.

When the image processing device 100 uses on-device learning, operation 1520 may operate similarly to operation 920 of FIG. 9. The descriptions redundant with those given with reference to FIG. 9 are omitted here.

In operation 1530, the image processing device 100 may obtain the depth map 10 of the input image 110 based on the depth estimation model. Operation 1530 may operate similarly to operation 930 of FIG. 9. The descriptions redundant with those given with reference to FIG. 9 are omitted here.

In operation 1540, the image processing device 100 according to an embodiment of the disclosure may analyze sizes and distributions of objects included in scenes constituting the input image 110, respectively, based on the input image 110 and the depth map 10 of the input image 110.

The image processing device 100 according to an embodiment of the disclosure may analyze the sizes of objects included in the scenes constituting the 2D input image 110, respectively, by calculating an area of pixels occupied by each of objects included in each of the scenes constituting the input image 110 and measuring the sizes of objects, and comparing relative sizes of objects included in one scene.

The image processing device 100 according to an embodiment of the disclosure may analyze the distribution of objects included in the scenes constituting the input image 110 in space, based on the depth map 10 of the input image 110.

The image processing device 100 according to an embodiment of the disclosure may analyze the sizes and distributions of objects included in the scenes constituting the input image 110, respectively, by using the scene object analysis model 1100.

The scene object analysis model 1100 may refer to an artificial neural network model trained to analyze the sizes and distributions of objects included in the scenes constituting the input image 110, respectively.

The image processing device 100 according to an embodiment of the disclosure may analyze the sizes and distributions of objects included in the scenes constituting the input image 110, respectively, by using a policy-based algorithm. The policy-based algorithm for analyzing the sizes and distributions of objects included in the scenes constituting the input image 110 may be predefined/set by a manufacturer of the image processing device 100.

The image processing device 100 according to an embodiment of the disclosure may analyze the sizes and distributions of objects included in the scenes constituting the input image 110, respectively, by mixing the scene object analysis model 1100 and the policy-based algorithm.

In operation 1550, the image processing device 100 according to an embodiment of the disclosure may obtain the modified depth map 20 by non-linearly changing the depth map 10, based on the result 1110 of analyzing sizes and distributions of objects included in the scenes.

The image processing device 100 according to an embodiment of the disclosure may obtain the additional information 1201. In an embodiment of the disclosure, the additional information 1201 may include at least one of metadata information related to the input image 110, information about a viewing environment, or user setting information.

The image processing device 100 according to an embodiment of the disclosure may obtain the modified depth map 20 by non-linearly changing the depth map 10, based on at least one of the depth map 10 of the input image 110, the result 1110 of analyzing sizes and distributions of objects included in the scenes constituting the input image 110, the result 510 of analyzing the content class of the input image 110, or the additional information 1201.

The image processing device 100 according to an embodiment of the disclosure may generate an offset for objects included in scenes constituting the input image 110, based on the result 1110 of analyzing sizes and distributions of objects included in the scenes.

The image processing device 100 according to an embodiment of the disclosure may non-linearly change the depth map 10, by adjusting depth information included in the depth map 10 of the input image 110 by the offset generated for objects included in the scenes.

The image processing device 100 according to an embodiment of the disclosure may control an output range of the depth map, based on at least one of the result 510 of analyzing the content class of the input image 110 or the obtained additional information 1201. The output range of the depth map may refer to a range from the minimum to the maximum of the depth information of pixels included in the depth map. In an embodiment of the disclosure, the image processing device 100 may control the output range of the depth map, by preferentially considering information included in the additional information 1201 rather than the result 510 of analyzing the content class of the input image 110.

According to an embodiment of the disclosure, the image processing device 100 may obtain the modified depth map 20 by non-linearly changing the depth map 10 by using the depth map dynamic change model 1200.

The depth map dynamic change model 1200 may refer to an artificial neural network model trained to non-linearly change the depth map 10.

According to an embodiment of the disclosure, the image processing device 100 may obtain the modified depth map 20 by non-linearly changing the depth map 10 by using a policy-based algorithm. The policy-based algorithm for non-linearly changing the depth map 10 may be predefined/set by a manufacturer of the image processing device 100.

According to an embodiment of the disclosure, the image processing device 100 may obtain the modified depth map 20 by non-linearly changing the depth map 10 by using an LUT method. A specific function or a mapping table for the LUT method may be predefined/set by the manufacturer of the image processing device 100.

According to an embodiment of the disclosure, the image processing device 100 may obtain the modified depth map 20 by non-linearly changing the depth map 10 by mixing two or more of the depth map dynamic change model 1200, the policy-based algorithm, and the LUT method.

In operation 1560, the image processing device 100 according to an embodiment of the disclosure may determine relative positions of objects included in the scenes from the virtual convergence plane corresponding to a screen, based on at least one of the result 510 of analyzing the content class of the input image 110 or the result 1110 of analyzing sizes and distributions of objects included in the scenes and at least one of the depth map 10 or the modified depth map 20 of the input image 110.

The image processing device 100 according to an embodiment of the disclosure may determine relative positions of objects included in the scenes constituting the input image 110 from the virtual convergence plane corresponding to the screen by using the stereoscopic effect control model 1300.

The stereoscopic effect control model 1300 may refer to an artificial neural network model trained to determine relative positions of objects included in the scenes constituting the 2D input image 110 from the virtual convergence plane corresponding to the screen.

The image processing device 100 according to an embodiment of the disclosure may determine relative positions of objects included in the scenes constituting the input image 110 from the virtual convergence plane corresponding to the screen by using a policy-based algorithm. The policy-based algorithm for determining relative positions of objects included in the scenes constituting the input image 110 from the virtual convergence plane corresponding to the screen may be predefined/set by the manufacturer of the image processing device 100.

The image processing device 100 according to an embodiment of the disclosure may determine relative positions of objects included in the scenes constituting the input image 110 from the virtual convergence plane corresponding to the screen by using an LUT method.

The image processing device 100 according to an embodiment of the disclosure may determine relative positions of objects included in the scenes constituting the input image 110 from the virtual convergence plane corresponding to the screen by mixing two or more of the stereoscopic effect control model 1300, the policy-based algorithm, and the LUT method.

In operation 1570, the image processing device 100 according to an embodiment of the disclosure may perform 3D conversion for the input image 110 based on the modified depth map 20 and information 1310 about relative positions of objects included in the scenes with respect to the virtual convergence plane.

The image processing device 100 according to an embodiment of the disclosure may perform 3D conversion for the input image 110, by performing the process 370 of generating a new viewpoint view, the hole filling process 380, and the pixel mapping process 390, based on the modified depth map 20 (e.g., the second depth map) of the input image 110 and the information 1310 about relative positions of objects included in the scenes with respect to the virtual convergence plane.

According to an embodiment of the disclosure, the image processing device 100 may non-linearly change a depth map and control a stereoscopic effect, based on the analysis of sizes and distributions of objects included in scenes constituting an input 2D image, and thus, depth estimation errors may be reduced, thereby further improving the accuracy of depth estimation, and improving the satisfaction of a user using a 3D display.

However, the effects that may be obtained from the disclosure are not limited to the effects mentioned above, and other effects not mentioned will be clearly understood by one of ordinary skill in the art from the description below.

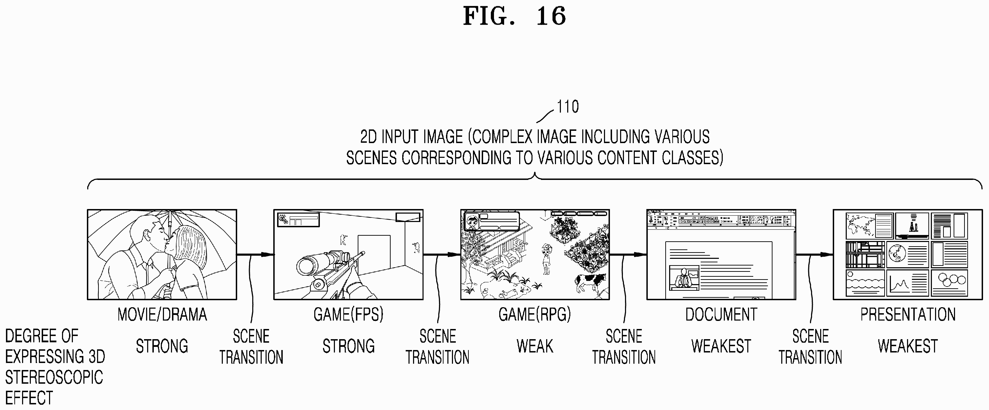

FIG. 16 is a diagram for describing an example of an effect of the image processing device 100 according to an embodiment of the disclosure.

Referring to FIG. 16, when the 2D input image 110 is a complex image including scenes having various content classes, the image processing device 100 according to an embodiment of the disclosure may provide a 2D to 3D conversion method that allows a user to view for a long time in consideration of a stereoscopic effect for each scene and a user's fatigue, by providing a strong stereoscopic effect in FPS game, providing a moderate stereoscopic effect in RPG game, appropriately adjusting a stereoscopic effect according to a scene in drama and movie content, and reducing the stereoscopic effect to 2D level in document.

Specifically, the method provided by the image processing device 100 according to an embodiment of the disclosure differs from the existing technology that continuously provides a fixed stereoscopic effect on an input image. The image processing device 100 according to an embodiment of the disclosure may dynamically control the stereoscopic effect for each content class to provide a dynamic depth according to content classes, non-linearly adjust a depth map according to sizes and distributions of objects for each scene, and determine a relative position of a screen, and thus, depth estimation errors may be reduced, thereby improving the accuracy of depth estimation, and reducing the user's fatigue even when the user views for a long time.

FIG. 17 is a block diagram of the image processing device 100 according to an embodiment of the disclosure.

Referring to FIG. 17, the image processing device 100 according to an embodiment of the disclosure may include at least one processor 101 and a memory 102.

The memory 102 may store one or more instructions to perform a 3D conversion function disclosed in the disclosure. The memory 102 may store at least one program executed by the processor 101. At least one neural network and/or a predefined policy-based algorithm or a neural network model may be stored in the memory 102. In addition, the memory 102 may store data input to or output from the image processing device 100.

The memory 102 may include at least one type of storage medium among flash memory type memory, hard disk type memory, multimedia card micro type memory, card type memory (e.g., SD or XD memory, etc.), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, or optical disk.

The at least one processor 101 may control the overall operations of the image processing device 100. The at least one processor 101 may execute the one or more instructions stored in the memory 102 to control the image processing device 100 to function.

For example, the at least one processor 101 may perform functions of the image processing device 100 shown in FIGS. 1 to 16 by executing the one or more instructions stored in the memory 120.

The at least one processor 101 may be configured as one or more processors. At this time, the one or more processors may be a general-purpose processor such as a CPU, an AP, or a digital signal processor (DSP), a graphics dedicated processor such as a GPU or a vision processing unit (VPU), or an artificial intelligence dedicated processor such as an NPU. For example, when the one or more processors are artificial intelligence dedicated processors, the artificial intelligence dedicated processors may be designed with a hardware structure specialized for processing a specific artificial intelligence model.

According to an embodiment of the disclosure, the at least one processor 101 may execute the one or more instructions stored in the memory 102 to analyze a content class of an input image. The at least one processor 101 may execute the one or more instructions stored in the memory 102 to obtain a depth estimation model corresponding to a content class of the input image in real time, by using on-device learning, based on a result of analyzing the content class of the input image. The at least one processor 101 may execute the one or more instructions stored in the memory 102 to obtain a depth map of the input image that reflects estimated depth information, based on the depth estimation model according to the depth estimation model. The at least one processor 101 may perform 3D conversion on the input image based on the depth map of the input image.

According to an embodiment of the disclosure, the result of analyzing the content class of the input image may include information related to the probabilities that the input image corresponds to predefined content classes, respectively.

According to an embodiment of the disclosure, the depth estimation model corresponding to the input image is obtained in real time, by updating parameters of the depth estimation model and training the depth estimation model, on the image processing device 100, based on the result of analyzing the content class of the input image.

According to an embodiment of the disclosure, the depth estimation model corresponding to the input image 110 is obtained in real time, by interpolating depth estimation models, on the image processing device 100, based on the result of analyzing the content class of the input image.

According to an embodiment of the disclosure, the at least one processor 101 may execute the one or more instructions stored in the memory 102 to obtain depth estimation models respectively corresponding to scenes constituting the input image in real time, based on the result of analyzing the content class of the input image. The at least one processor 101 may execute the one or more instructions stored in the memory 102 to obtain a depth map of the input image in real time, by applying depth estimation models respectively corresponding to the scenes constituting the input image for the scenes constituting the input image.

According to an embodiment of the disclosure, the at least one processor 101 may execute the one or more instructions stored in the memory 102 to analyze sizes and distributions of objects included in the scenes constituting the input image, respectively, based on the input image and the depth map of the input image. The at least one processor 101 may execute the one or more instructions stored in the memory 102 to obtain a modified depth map by non-linearly changing the depth map based on the result of analyzing the sizes and distributions of objects included in the scenes. The at least one processor 101 may execute the one or more instructions stored in the memory 102 to perform 3D conversion for the input image based on the modified depth map.

According to an embodiment of the disclosure, the at least one processor 101 may execute the one or more instructions stored in the memory 102 to obtain additional information including at least one of metadata information about the input image, information about a viewing environment, or user setting information. The at least one processor 101 may execute the one or more instructions stored in the memory 102 to control an output range of the depth map or the modified depth map based on at least one of the obtained additional information or the result of analyzing the content class of the input image.

According to an embodiment of the disclosure, the at least one processor 101 may execute the one or more instructions stored in the memory 102 to generate an offset for objects included in the scenes constituting the input image, respectively, based on the result of analyzing sizes and distributions of objects included in the scenes. The at least one processor 101 may execute the one or more instructions stored in the memory 102 to obtain the modified depth map by non-linearly changing the depth map, by adjusting depth information included in the depth map of the input image by the offset generated for objects included in the scenes.

According to an embodiment of the disclosure, the at least one processor 101 may execute the one or more instructions stored in the memory 102 to determine relative positions of objects included in the scenes from a virtual convergence plane corresponding to the screen, based on at least one of the result of analyzing the content class of the input image, the result of analyzing the sizes and distributions of objects included in the scenes, or the obtained additional information. The at least one processor 101 may execute the one or more instructions stored in the memory 102 to perform 3D conversion for the input image, based on information about the relative positions of objects included in the scenes with respect to the convergence plane.

According to an embodiment of the disclosure, the at least one processor 101 may execute the one or more instructions stored in the memory 102 to control a display to generate and output a UI that indicates a content class corresponding to scenes constituting a 3D output image converted from the input image and a stereoscopic effect of each of the scenes.

A specific example for describing the embodiment of the disclosure is only a single combination of standard, method, detailed method, and operation, and through a combination of at least two or more techniques among the various techniques described, the image processing device 100 may dynamically control the stereoscopic effect for each content class to provide a dynamic depth according to content classes, non-linearly adjust a depth map according to sizes and distributions of objects for each scene, and control stereoscopic effect, and thus, depth estimation errors may be reduced, thereby improving the accuracy of depth estimation, and reducing the user's fatigue even when the user views for a long time.

In addition, at this time, the 2D to 3D conversion method of the disclosure may be performed according to a method determined through one or a combination of at least two of the above-described techniques. For example, some of operations of an embodiment may be combined with some of operations of another embodiment and performed.

A machine-readable storage medium may be provided as a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

According to an embodiment of the disclosure, methods according to various embodiments of the disclosure may be provided in a computer program product. The computer program product is a product purchasable between a seller and a purchaser. The computer program product may be distributed in the form of a machine-readable storage medium (e.g., a compact disc (CD)-ROM), or distributed (e.g., downloaded or uploaded) online via an application store or between two user devices (e.g., smartphones) directly. When distributed online, at least part of the computer program product (e.g., a downloadable application) may be temporarily generated or at least temporarily stored in a machine-readable storage medium, such as a memory of a server of a manufacturer, a server of an application store, or a relay server.

**Claims**

1. An image processing device comprising:

   a memory to store one or more instructions; and
   at least one processor configured to execute the one or more instructions stored in the memory to:

   analyze a content class of an input image,
   based on a result of analyzing the content class of the input image, obtain a depth estimation model corresponding to the content class of the input image in real time by using on-device learning,
   based on the depth estimation model according to the on-device learning, obtain a depth map of the input image that reflects estimated depth information, and
   based on the depth map of the input image, perform three-dimensional (3D) conversion for the input image.

2. The image processing device of claim 1, wherein the result of analyzing the content class of the input image includes information related to probabilities that the input image corresponds to predefined content classes, respectively.

3. The image processing device of claim 1 or 2, wherein the depth estimation model is obtained in real time, by updating parameters of the depth estimation model and training the depth estimation model, on the image processing device, based on the result of analyzing the content class of the input image.

4. The image processing device of any one of claims 1 to 3, the depth estimation model corresponding to the input image is obtained in real time, by interpolating depth estimation models, on the image processing device, based on the result of analyzing the content class of the input image.

5. The image processing device of any one of claims 1 to 4, wherein the at least one processor is configured to execute the one or more instructions to:

obtain depth estimation models corresponding to scenes constituting the input image in real time, respectively, based on the result of analyzing the content class of the input image, and
the depth map of the input image in real time is obtained by applying the depth estimation models corresponding to the scenes constituting the input image, respectively, to the scenes constituting the input image.

6. The image processing device of any one of claims 1 to 5, wherein the at least one processor is further configured to execute the one or more instructions to:

analyze sizes and distributions of objects included in the scenes constituting the input image, respectively, based on the input image and the depth map of the input image,
obtain a modified depth map by non-linearly changing the depth map, based on a result of analyzing the sizes and the distributions of the objects included in the scenes, respectively, and
based on the modified depth map, perform 3D conversion for the input image.

7. The image processing device of any one of claims 1 to 6, wherein the at least one processor is further configured to execute the one or more instructions to:

obtain additional information including at least one of metadata information about the input image, information about a viewing environment of the input image, or user setting information, and
control an output range of the depth map or the modified depth map, based on at least one of the obtained additional information or the result of analyzing the content class of the input image.

8. The image processing device of claim 6 or 7, wherein the at least one processor is further configured to execute the one or more instructions to:

generate an offset for the objects included in the scenes, respectively, based on the result of analyzing the sizes and the distributions of the objects included in the scenes constituting the input image, and
obtain the modified depth map by non-linearly changing the depth map, by adjusting depth information included in the depth map of the input image based on the offset generated for the objects included in the scenes.

9. The image processing device of any one of claims 1 to 8, wherein the at least one processor is further configured to execute the one or more instructions to:

determine relative positions of the objects included in the scenes with respect to a virtual convergence plane corresponding to a screen, based on at least one of the result of analyzing the content class of the input image, the result of analyzing the sizes and the distributions of the objects included in the scenes, or the obtained additional information, and
perform the 3D conversion for the input image, based on information about the relative positions of the objects included in the scenes with respect to the virtual convergence plane.

10. The image processing device of any one of claims 1 to 9, wherein the at least one processor is further configured to execute the one or more instructions to:
control a display to generate and output a user interface (UI) that indicates a content class corresponding to scenes constituting a 3D output image converted from the input image and a stereoscopic effect of the scenes.

11. A method performed by an image processing device, the method comprising:

analyzing a content class of an input image;
based on a result of analyzing the content class of the input image, obtaining a depth estimation model corresponding to the content class of the input image in real time by using on-device learning;
based on the depth estimation model according to the on-device learning, obtaining a depth map of the input image that reflects estimated depth information; and

based on the depth map of the input image, performing three-dimensional (3D) conversion for the input image.

12. The method of claim 11, wherein the depth estimation model is obtained in real time, by updating parameters of the depth estimation model and training the depth estimation model, on the image processing device, based on the result of analyzing the content class of the input image.

13. The method of claim 11 or 12, wherein the depth estimation model is obtained in real time, by interpolating depth estimation models, on the image processing device, based on the result of analyzing the content class of the input image.

14. The method of any one of claims 11 to 13, further comprising:

obtaining depth estimation models corresponding to scenes constituting the input image in real time, respectively, based on the result of analyzing the content class of the input image; and

wherein the depth map of the input image is obtained in real time, by applying the depth estimation models corresponding to the scenes constituting the input image, respectively, to the scenes constituting the input image.

15. A computer-readable recording medium having recorded thereon at least one program for implementing the method of any one of claims 11 to 14.

# FIG. 1

2D INPUT IMAGE → [100] → 3D OUTPUT IMAGE

110

120

# FIG. 2A

2D INPUT IMAGE → ESTIMATE DEPTH (DEPTH ESTIMATION) — 210

DEPTH MAP

GENERATE NEW VIEWPOINT VIEW (GENERATE STEREOSCOPIC IMAGE) — 220 → HOLE-FILLING — 230 → PIXEL MAPPING — 240 → 3D OUTPUT IMAGE

EP 4 787 310 A1

# FIG. 2B

221 REALITY

222 OBJECT APPEAR BEHIND
(BEHIND-SCREEN
(POSITIVE DISPARITY))

223 OBJECT APPEAR FRONT
(POP-UP
(NEGATIVE DISPARITY))

# FIG. 2C

250A

250B

FIG. 3

ADDITIONAL INFORMATION (METADATA INFORMATION, INFORMATION ABOUT VIEWING ENVIRONMENT, OR USER SETTING INFORMATION)

100

310 — ANALYZE CONTENT CLASS

RESULT OF ANALYZING CONTENT CLASS

OBTAIN DEPTH ESTIMATION MODEL

320 — OBTAIN DEPTH ESTIMATION MODEL

DEPTH ESTIMATION MODEL

360 — CONTROL STEREOSCOPIC EFFECT

330 — ESTIMATE DEPTH (DEPTH ESTIMATION)

10 DEPTH MAP

350 — DYNAMICALLY CHANGE DEPTH MAP

20 MODIFIED DEPTH MAP

110 2D INPUT IMAGE

370 GENERATE NEW VIEWPOINT VIEW

380 Hole-filling

390 PIXEL MAPPING

120 3D OUTPUT IMAGE

340 — ANALYZE SCENE OBJECT

DISTRIBUTION/SIZE FOR EACH OBJECT

EP 4 787 310 A1

36

# FIG. 4

# FIG. 5

CONTENT CLASS ANALYZER

100,410

500

EXAMPLES OF CONTENT CLASSES

110
2D INPUT IMAGE

MOVIE/DRAMA

FPS GAME

RPG GAME

DOCUMENT

COMPLEX CONTENT

PRESENTATION MATERIAL

510
RESULT OF ANALYZING CONTENT CLASS

EP 4 787 310 A1

# FIG. 6

DEPTH ESTIMATION MODEL OBTAINER 100,420

600 CLOUD SERVER

640 (SCENE TRANSITION OF 2D INPUT IMAGE )

510 RESULT OF ANALYZING CONTENT CLASS

610 PROCESS RESULT OF ANALYZING CONTENT CLASS

IIR

620

Model 1    Model 2    Model 3    Model 4

Model 1

630 OBTAIN MODEL CORRESPONDING TO HIGHEST PROBABILITY

EP 4 787 310 A1

## FIG. 7

100,420

DEPTH ESTIMATION MODEL OBTAINER

700

DB OF 2D INPUT
IMAGE−DEPTH MAP PAIR

701

| Model 1 | Model 2 | Model 3 | Model 4 |

730

(SCENE TRANSITION OF
2D INPUT IMAGE )

720

TRAINING DEPTH ESTIMATION MODELS
BY UPDATING PARAMETERS (TRAINING)

510

RESULT OF ANALYZING
CONTENT CLASS

710

PROCESS RESULT
OF ANALYZING
CONTENT CLASS

IIR

GENERATE NEW
DEPTH ESTIMATION
MODEL Model Z

# FIG. 8

# FIG. 9

900

START

ANALYZE CONTENT CLASS OF INPUT IMAGE — 910

OBTAIN A DEPTH ESTIMATION MODEL
CORRESPONDING TO CONTENT CLASS OF INPUT
IMAGE IN REAL TIME BY USING ON-DEVICE
LEARNING, BASED ON THE RESULT OF
ANALYZING CONTENT CLASS OF INPUT IMAGE — 920

BASED ON DEPTH ESTIMATION MODEL
ACCORDING TO ON-DEVICE LEARNING,
OBTAIN DEPTH MAP OF INPUT IMAGE THAT
REFLECTS ESTIMATED DEPTH INFORMATION — 930

PERFORM 3D CONVERSION FOR INPUT IMAGE
BASED ON DEPTH MAP OF INPUT IMAGE — 940

END

# FIG. 10

# FIG. 11

SCENE OBJECT ANALYZER — 100,1040

110 → 2D INPUT IMAGE

10 → DEPTH MAP

1100

1120 — EXAMPLES OF SCENE OBJECT ANALYSIS

1110 — RESULT OF ANALYZING SIZES AND DISTRIBUTIONS OF OBJECTS INCLUDED IN EACH OF SCENES

|  | A | B | C | D | E | F |
|---|---|---|---|---|---|---|
| OBJECT SIZE | LARGE | SMALL | LARGE | SMALL | LARGE/MEDIUM/ SMALL | MEDIUM |
| OBJECT DISTRIBUTION | CLOSE VIEW | CLOSE VIEW/ MIDDLE VIEW/ /DISTANT VIEW | DISTANT VIEW | CLOSE VIEW | CLOSE VIEW/ MIDDLE VIEW/ /DISTANT VIEW | MIDDLE VIEW/ DISTANT VIEW |

EP 4 787 310 A1

# FIG. 12A

EP 4 787 310 A1

# FIG. 12B

# FIG. 12C

1221

INPUT
DEPTH MAP

OUTPUT
DEPTH MAP

INCREASE OF
STEREOSCOPIC EFFECT

1222

INPUT
DEPTH MAP

OUTPUT
DEPTH MAP

REMOVAL OF
STEREOSCOPIC EFFECT

1223

INPUT
DEPTH MAP

OUTPUT
DEPTH MAP

INCREASE OF
STEREOSCOPIC EFFECT

# FIG. 13

DEPTH MAP OR MODIFIED DEPTH MAP /10, 20

RESULT OF ANALYZING SIZES
AND DISTRIBUTIONS OF OBJECTS
INCLUDED IN EACH OF SCENES /1110

RESULT OF ANALYZING CONTENT CLASS /510

ADDITIONAL INFORMATION (METADATA
INFORMATION, INFORMATION ABOUT
VIEWING ENVIRONMENT,
OR USER SETTING INFORMATION) /1201

STEREOSCOPIC EFFECT CONTROLLER /100,1060

1300

INFORMATION ABOUT RELATIVE POSITION
FOR EACH OF OBJECTS WITH RESPECT TO
VIRTUAL CONVERGENCE PLANE(SCREEN) /1310

EP 4 787 310 A1

FIG. 14

# FIG. 15

```
            ( START )                    ⟋1500
               │                    ⟍⟍⟋
               ▼
┌──────────────────────────────────────────────┐
│   ANALYZE CONTENT CLASS OF INPUT IMAGE         │─── 1510
└──────────────────────────────────────────────┘
               │
               ▼
┌──────────────────────────────────────────────┐
│  OBTAIN DEPTH ESTIMATION MODEL CORRESPONDING TO│
│  INPUT IMAGE IN REAL TIME, BASED ON RESULT OF   │─── 1520
│  ANALYZING CONTENT CLASS OF INPUT IMAGE         │
└──────────────────────────────────────────────┘
               │
               ▼
┌──────────────────────────────────────────────┐
│  OBTAIN DEPTH MAP OF INPUT IMAGE, BASED ON      │
│  DEPTH ESTIMATION MODEL                         │─── 1530
└──────────────────────────────────────────────┘
               │
               ▼
┌──────────────────────────────────────────────┐
│  ANALYZE SIZES AND DISTRIBUTIONS OF OBJECTS     │
│  INCLUDED IN SCENES CONSTITUTING INPUT IMAGE,   │─── 1540
│  RESPECTIVELY, BASED ON INPUT IMAGE AND DEPTH   │
│  MAP OF INPUT IMAGE                             │
└──────────────────────────────────────────────┘
               │
               ▼
┌──────────────────────────────────────────────┐
│  OBTAIN MODIFIED DEPTH MAP  BY NON-LINEARLY     │
│  CHANGING DEPTH MAP, BASED ON THE RESULT OF     │─── 1550
│  ANALYZING SIZES AND DISTRIBUTIONS OF OBJECTS   │
│  INCLUDED IN SCENES                             │
└──────────────────────────────────────────────┘
               │
               ▼
┌──────────────────────────────────────────────┐
│  DETERMINE RELATIVE POSITIONS OF OBJECTS        │
│  INCLUDED IN SCENES FROM VIRTUAL CONVERGENCE    │
│  PLANE CORRESPONDING TO SCREEN, BASED ON AT     │
│  LEAST ONE OF THE RESULT OF ANALYZING CONTENT   │
│  CLASS OF INPUT IMAGE OR RESULT OF ANALYZING    │─── 1560
│  SIZES AND DISTRIBUTIONS OF OBJECTS INCLUDED IN │
│  SCENES AND AT LEAST ONE OF DEPTH MAP OR        │
│  MODIFIED DEPTH MAP OF INPUT IMAGE              │
└──────────────────────────────────────────────┘
               │
               ▼
┌──────────────────────────────────────────────┐
│  PERFORM 3D CONVERSION FOR INPUT IMAGE          │
│  BASED ON MODIFIED DEPTH MAP AND INFORMATION    │─── 1570
│  ABOUT RELATIVE POSITIONS OF OBJECTS INCLUDED IN│
│  SCENES WITH RESPECT TO VIRTUAL CONVERGENCE PLANE│
└──────────────────────────────────────────────┘
               │
               ▼
            (  END  )
```

# FIG. 16

2D INPUT IMAGE (COMPLEX IMAGE INCLUDING VARIOUS SCENES CORRESPONDING TO VARIOUS CONTENT CLASSES) — 110

DEGREE OF EXPRESSING 3D STEREOSCOPIC EFFECT

| MOVIE/DRAMA | SCENE TRANSITION | GAME(FPS) | SCENE TRANSITION | GAME(RPG) | SCENE TRANSITION | DOCUMENT | SCENE TRANSITION | PRESENTATION |
| STRONG | | STRONG | | WEAK | | WEAKEST | | WEAKEST |

EP 4 787 310 A1

# FIG. 17

IMAGE PROCESSING DEVICE 100

PROCESSOR 101 ↔ MEMORY 102

## INTERNATIONAL SEARCH REPORT

| International application No. |
|---|
| **PCT/KR2024/096095** |

| A. | CLASSIFICATION OF SUBJECT MATTER |
|---|---|

**G06T 7/593**(2017.01)i; **G06T 17/00**(2006.01)i; **G06T 3/4007**(2024.01)i; **G06N 3/08**(2006.01)i

According to International Patent Classification (IPC) or to both national classification and IPC

| B. | FIELDS SEARCHED |
|---|---|

Minimum documentation searched (classification system followed by classification symbols)

G06T 7/593(2017.01); G06F 16/00(2019.01); G06F 3/0481(2013.01); G06N 3/02(2006.01); G06T 15/06(2011.01); H04N 13/00(2006.01); H04N 13/128(2018.01); H04N 13/239(2018.01); H04N 13/271(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 입력(input), 영상(image), 컨텐츠(content), 종류(type), 온 디바이스 러닝(On-device learning), 깊이(depth), 추정(estimation), 모델(model), 깊이 맵(depth map), 3D(three-dimensional)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2023-0117601 A (KONINKLIJKE PHILIPS N.V.) 08 August 2023 (2023-08-08) See paragraphs [0061], [0109] and [0137]; and claim 14. | 1-6,10-15 |
| A | | 7-9 |
| Y | KR 10-2022-0146900 A (SAMSUNG ELECTRONICS CO., LTD.) 02 November 2022 (2022-11-02) See paragraphs [0029], [0046], [0091]-[0092] and [0131]; claims 1-4 and 6; and figures 1, 6b and 7a-7c. | 1-6,10-15 |
| Y | KR 10-2018-0120146 A (GRACENOTE, INC.) 05 November 2018 (2018-11-05) See claims 1-2. | 2-3,12 |
| Y | KR 10-2021-0099498 A (APPLE INC.) 12 August 2021 (2021-08-12) See claim 1. | 10 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 December 2024** | **03 December 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/096095** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2023-111909 A1 (NIANTIC INTERNATIONAL TECHNOLOGY LIMITED et al.) 22 June 2023 (2023-06-22)<br>See paragraphs [0004]-[0005]; and claims 1-10. | 1-15 |

Form PCT/ISA/210 (second sheet) (July 2022)

**INTERNATIONAL SEARCH REPORT**
Information on patent family members

International application No.

**PCT/KR2024/096095**

| Patent document cited in search report | | | Publication date (day/month/year) | Patent family member(s) | | | Publication date (day/month/year) |
|---|---|---|---|---|---|---|---|
| KR | 10-2023-0117601 | A | 08 August 2023 | CA | 3204335 | A1 | 16 June 2022 |
| | | | | CN | 116569214 | A | 08 August 2023 |
| | | | | EP | 4013049 | A1 | 15 June 2022 |
| | | | | EP | 4260554 | A1 | 18 October 2023 |
| | | | | JP | 2023-553914 | A | 26 December 2023 |
| | | | | TW | 202226158 | A | 01 July 2022 |
| | | | | US | 2023-0419524 | A1 | 28 December 2023 |
| | | | | WO | 2022-122701 | A1 | 16 June 2022 |
| KR | 10-2022-0146900 | A | 02 November 2022 | CN | 115249256 | A | 28 October 2022 |
| | | | | US | 11978223 | B2 | 07 May 2024 |
| | | | | US | 2022-0343523 | A1 | 27 October 2022 |
| KR | 10-2018-0120146 | A | 05 November 2018 | EP | 4024233 | A1 | 06 July 2022 |
| | | | | JP | 2019-508787 | A | 28 March 2019 |
| | | | | JP | 6730435 | B2 | 29 July 2020 |
| | | | | KR | 10-2020-0100677 | A | 26 August 2020 |
| | | | | KR | 10-2450993 | B1 | 06 October 2022 |
| | | | | US | 10635701 | B2 | 28 April 2020 |
| | | | | US | 2021-0149939 | A1 | 20 May 2021 |
| | | | | WO | 2017-117234 | A1 | 06 July 2017 |
| KR | 10-2021-0099498 | A | 12 August 2021 | AU | 2020-239675 | A1 | 19 August 2021 |
| | | | | CN | 115756167 | A | 07 March 2023 |
| | | | | DK | 202070604 | A1 | 05 November 2021 |
| | | | | EP | 4100817 | A1 | 14 December 2022 |
| | | | | JP | 2021-125214 | A | 30 August 2021 |
| | | | | JP | 7488304 | B2 | 21 May 2024 |
| | | | | KR | 10-2021-0098823 | A | 11 August 2021 |
| | | | | KR | 10-2628335 | B1 | 23 January 2024 |
| | | | | US | 11003308 | B1 | 11 May 2021 |
| | | | | US | 11080879 | B1 | 03 August 2021 |
| | | | | US | 2021-0304465 | A1 | 30 September 2021 |
| | | | | US | 2023-0341991 | A1 | 26 October 2023 |
| | | | | WO | 2021-158427 | A1 | 12 August 2021 |
| WO | 2023-111909 | A1 | 22 June 2023 | AU | 2022-412069 | A1 | 22 June 2023 |
| | | | | CA | 3242611 | A1 | 22 June 2023 |
| | | | | EP | 4449363 | A1 | 23 October 2024 |
| | | | | KR | 10-2024-0124969 | A | 19 August 2024 |
| | | | | TW | 202331652 | A | 01 August 2023 |
| | | | | US | 2023-0196690 | A1 | 22 June 2023 |

Form PCT/ISA/210 (patent family annex) (July 2022)